(19) Europäisches Patentamt / European Patent Office / Office européen des brevets

(11) **EP 4 308 902 B1**

(12) **EUROPEAN PATENT SPECIFICATION**

(45) Date of publication and mention of the grant of the patent:
**18.02.2026 Bulletin 2026/08**

(21) Application number: **22771866.5**

(22) Date of filing: **18.03.2022**

(51) International Patent Classification (IPC):
**G01N 15/14** $^{(2024.01)}$       **G01N 33/49** $^{(2006.01)}$
**B01L 3/00** $^{(2006.01)}$       **G01N 15/02** $^{(2024.01)}$
**G01N 15/10** $^{(2024.01)}$       **G01N 15/1031** $^{(2024.01)}$

(52) Cooperative Patent Classification (CPC):
**B01L 3/502761; B01L 3/502776; G01N 15/0266; G01N 15/1023; G01N 15/1031;** B01L 2200/0636; B01L 2200/0652; B01L 2300/0645; B01L 2300/0864; B01L 2300/088; G01N 2015/1006; G01N 2015/1028; G01N 2015/1029

(86) International application number:
**PCT/SG2022/050149**

(87) International publication number:
**WO 2022/197253 (22.09.2022 Gazette 2022/38)**

(54) **METHOD FOR LABEL-FREE CELL ACTIVATION PROFILING USING MICROFLUIDIC IMPEDANCE CYTOMETRY**

VERFAHREN ZUR MARKIERUNGSFREIEN ZELLAKTIVIERUNGSPROFILIERUNG MITTELS MIKROFLUIDISCHER IMPEDANZZYTOMETRIE

PROCÉDÉ DE PROFILAGE D'ACTIVATION DE CELLULE SANS MARQUEUR À L'AIDE D'UNE CYTOMÉTRIE D'IMPÉDANCE MICROFLUIDIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.03.2021 SG 10202102747Y**

(43) Date of publication of application:
**24.01.2024 Bulletin 2024/04**

(73) Proprietor: **Nanyang Technological University Singapore 639798 (SG)**

(72) Inventors:
• **HOU, Han Wei**
  **Singapore 639798 (SG)**
• **PETCHAKUP, Chayakorn**
  **Singapore 639798 (SG)**
• **LI, King Ho Holden**
  **Singapore 639798 (SG)**

(74) Representative: **Viering, Jentschura & Partner mbB**
**Patent- und Rechtsanwälte**
**Am Brauhaus 8**
**01099 Dresden (DE)**

(56) References cited:
**EP-A1- 2 259 044**       **WO-A1-2020/069185**
**US-A1- 2019 232 290**

• **PETCHAKUP CHAYAKORN ET AL: "Integrated inertial-impedance cytometry for rapid label-free leukocyte isolation and profiling of neutrophil extracellular traps (NETs)", vol. 19, no. 10, 14 May 2019 (2019-05-14), UK, pages 1736 - 1746, XP055975771, ISSN: 1473-0197, Retrieved from the Internet <URL:https://pubs.rsc.org/en/content/articlepdf/2019/lc/c9lc00250b> DOI: 10.1039/C9LC00250B**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- HONRADO CARLOS ET AL: "Single-cell microfluidic impedance cytometry: from raw signals to cell phenotypes using data analytics", vol. 21, no. 1, 23 November 2020 (2020-11-23), pages 22 - 54, XP093029658, Retrieved from the Internet <URL:https://pubs.rsc.org/en/content/articlepdf/2021/lc/d0lc00840k> DOI: 10.1039/D0LC00840K
- PETCHAKUP CHAYAKORN, TAY HUI MIN, LI KING HO HOLDEN, HOU HAN WEI: "Integrated inertial-impedance cytometry for rapid label-free leukocyte isolation and profiling of neutrophil extracellular traps (NETs)", LAB ON A CHIP, ROYAL SOCIETY OF CHEMISTRY, UK, vol. 19, no. 10, 14 May 2019 (2019-05-14), UK , pages 1736 - 1746, XP055975771, ISSN: 1473-0197, DOI: 10.1039/C9LC00250B
- CHAYAKORN PETCHAKUP, HUI MIN TAY , WEI HSEUN YEAP , RINKOO DALAN , SIEW CHENG WONG , KING HO HOLDEN LI , HAN WEI HOU : "Label-free leukocyte sorting and impedance-based profiling for diabetes testing", BIOSENSORS AND BIOELECTRONICS, vol. 118, 26 July 2018 (2018-07-26), pages 195 - 203, XP055975772
- NICHOLAS WATKINS, VENKATESAN BALA MURALI, TONER MEHMET, RODRIGUEZ WILLIAM, BASHIR RASHID: "A robust electrical microcytometer with 3-dimensional hydrofocusing", LAB ON A CHIP, ROYAL SOCIETY OF CHEMISTRY, UK, vol. 9, no. 22, 1 January 2009 (2009-01-01), UK , pages 3177 - 3184, XP055309691, ISSN: 1473-0197, DOI: 10.1039/b912214a
- HOU HAN WEI, PETCHAKUP CHAYAKORN, TAY HUI MIN, TAM ZHI YANG, DALAN RINKOO, CHEW DANIEL EK KWANG, LI KING HO HOLDEN, BOEHM BERNHARD: "Rapid and label-free microfluidic neutrophil purification and phenotyping in diabetes mellitus", SCIENTIFIC REPORTS, vol. 6, no. 1, 1 September 2016 (2016-09-01), pages 29410, XP055975775, DOI: 10.1038/srep29410
- PETCHAKUP CHAYAKORN; HUTCHINSON PAUL EDWARD; TAY HUI MIN; LEONG SHENG YUAN; LI KING HO HOLDEN; HOU HAN WEI: "Label-free quantitative lymphocyte activation profiling using microfluidic impedance cytometry", SENSORS AND ACTUATORS B: CHEMICAL, ELSEVIER BV, NL, vol. 339, 29 March 2021 (2021-03-29), NL , XP086552592, ISSN: 0925-4005, DOI: 10.1016/j.snb.2021.129864

**Description**

**Cross-reference to related application**

This application claims the benefit of priority of Singapore Patent Application No. 10202102747Y filed March 18, 2021.

**Field of the invention**

The present invention relates generally to the field of cell sorting and profiling using a label-free microfluidic method based on impedance cytometry. Specifically, the invention relates to biophysical profiling of neutrophils and lymphocytes in a sample by using microfluidic impedance cytometry with an integrated biosensor specifically designed for said purpose as well as to said biosensor.

**Background of the invention**

Lymphocytes are integral to our adaptive immunity system. Upon specific antigen recognition they secrete cytokines, undergo proliferation and differentiation, and regulate the overall immune response. Besides responses against pathogens such as HIV, these cells are also crucial in disorders such as cancer and cardiovascular diseases. Qualitative and quantitative detection of lymphocyte phenotypes is thus clinically useful to reflect host immunity status and for disease diagnostics. For example, lymphocyte count and neutrophil-to-lymphocyte ratios are often used as clinical parameters for disease prediction in bacteremia, malaria and tuberculosis. Activated T-lymphocytes, pivotal for cell-mediated immune responses, are also linked to susceptibility to HIV infection as well as survival of cancer patients.

As T-lymphocytes are highly diverse, it is crucial to perform single cell analysis to identify various lymphocyte subpopulations. Conventional techniques to study lymphocyte activation include measuring surface markers expression (e.g. CD69, CD137) by flow cytometry (Wolfl et al., Blood, 2007, 110, 201-210; Cibrián & Sánchez-Madrid, European journal of immunology, 2017, 47, 946-953), or secreted cytokines (e.g. IFNy, IL2) using enzyme linked immunosorbent assay (ELISA) (Versteegen et al., J Immunol Methods, 1988, 111, 25-29; Igietseme & Herscowitz, Journal of immunological methods, 1987, **97**, 123-131). However, these approaches are expensive and laborious due to antibodies usage, and thus not always scalable for clinical testing.

Electrical-based microtechnologies (e.g. dielectrophoresis (DEP), electrorotation, impedance cytometry) are attractive alternatives to facilitate label-free measurement of single cells with minimal sample requirement and cell perturbation (Sun & Morgan, Microfluidics and Nanofluidics, 2010, 8, 423-443; Chen et al., International Journal of Molecular Sciences, 2015, 16, 9804; Petchakup et al., Micromachines, 2017, 8, 87; Honrado et al., Lab on a Chip, 2021, 21, 22-54). Recent works include lymphocyte profiling using electrorotation (Pethig et al., Electrophoresis, 2002, 23, 2057-2063; Huang et al., Biochimica et Biophysica Acta (BBA) - Biomembranes, 1999, 1417, 51-62), and mice lymphocyte activation and lymphocyte differential counting using an impedance cytometer (Hassan et al., Nat. Protocols, 2016, 11, 714-726; Watkins et al., Science Translational Medicine, 2013, 5, 214ra170-214ra170; Rollo et al., Biosensors and Bioelectronics, 2017, 94, 193-199; Han et al., ACS Nano, 2020, 14, 8646-8657). However, these approaches suffer from low throughput (sample flow rate < 20 μL/min) and require additional blood sample preparation steps. While increasing throughput is feasible for impedance cytometry (Petchakup et al., Lab on a Chip, 2019, 19, 1736-1746), cells may undergo inertial focusing to have > 1 equilibrium positions in vertical (channel height) direction. This will lead to multiple cell clusters in an electrical profile which adversely affects phenotyping accuracy (Spencer et al., Lab on a Chip, 2016, DOI: 10.1039/C6LC00339G; De Ninno et al., Lab on a Chip, 2017, DOI: 10.1039/C6LC01516F; Caselli et al., Sensors and Actuators B: Chemical, 2018, 256, 580-589). Several solutions including DEP focusing (Haandbæk et al., ACS Sensors, 2016, 1, 1020-1027) and position sensing using multi-electrodes (Spencer et al., supra; De Ninno et al., supra) have been proposed, but the setup is complicated with additional instruments (amplifiers), and the larger detection region (due to additional electrodes) may increase particle coincidence events (having two or more particles in detection region).

Neutrophils are the most abundant and key effector cells of the innate immunity. Conventional techniques to study neutrophil activation include measuring surface markers expression by flow cytometry, or secreted cytokines/enzymes using enzyme linked immunosorbent assay (ELISA). However, these approaches are expensive and laborious due to antibodies usage, and thus not always scalable for clinical testing. Electrical-based microtechnologies (e.g. dielectrophoresis (DEP), electrorotation, impedance cytometry) are attractive alternatives to facilitate label-free measurement of single cells with minimal sample requirement and cell perturbation (Sun & Morgan, Microfluidics and Nanofluidics 8, 423-443, doi:10.1007/s10404-010-0580-9 (2010); Chen. et al. International Journal of Molecular Sciences 16, 9804 (2015); Honrado et al. Lab on a Chip 21, 22-54, doi:10.1039/D0LC00840K (2021)). Recent works include leukocyte profiling using electrorotation (Pethig, R. et al. Electrophoresis 23, 2057-2063, doi:10.1002/1522-2683(200207) 23:13<2057::AID-ELPS2057>3.0.CO;2-X (2002); Huang et al.. Biochimica et Biophysica Acta (BBA) - Biomembranes 1417, 51-62, doi:https://doi.org/10.1016/S0005-2736(98)00253-3 (1999)) and differential impedance cytometer (Watkins et al. Science Translational Medicine 5, 214ra170-214ra170, doi:10.1126/scitranslmed.3006870 (2013); Rollo et al. Biosensors and Bioelectronics 94, 193-199, doi:https://doi.org/10.1016/j.bios.2017.02.047 (2017); Han et al. ACS Nano 14, 8646-8657, doi:10.1021/acsnano.0c03018 (2020)). However, these approaches suffer from low throughput (sample flow rate < 20 $\mu$L/min) and require additional blood sample preparation steps.

To alleviate major hurdles, impedance cytometry is an emerging label-free single cell phenotyping technique based on cellular intrinsic electrical properties (Petchakup et al., Micromachines 8, 87 (2017)). This technology has been widely used for cell type determination (Hassan et al. Nat. Protocols 11, 714-726, doi:10.1038/nprot.2016.038; Simon et al. Lab on a Chip 16, 2326-2338, doi:10.1039/C6LC00128A (2016); Song et al. Lab on a Chip 13, 2300-2310, doi:10.1039/C3LC41321G (2013)), but has limited clinical utilities as the microfabricated impedance cytometers require conventional sample processing steps to purify target cell before analysis.

While increasing throughput is feasible for impedance cytometry, cells may undergo inertial focusing to have > 1 equilibrium positions in vertical (channel height) direction. This will lead to multiple cell clusters in an electrical profile which adversely affects phenotyping accuracy (Spencer et al. Lab on a Chip, doi:10.1039/C6LC00339G (2016); De Ninno et al. Lab on a Chip, doi:10.1039/C6LC01516F (2017); Caselli et al.. Sensors and Actuators B: Chemical 256, 580-589, doi:https://doi.org/10.1016/j.snb.2017.10.113 (2018)).

Several solutions including DEP focusing (Haandbæk et al. ACS Sensors 1, 1020-1027, doi:10.1021/acssensors.6b00286 (2016)) and position sensing using multi-electrodes (Spencer et al., supra; de Ninno et al., supra) have been proposed, but the setup is complicated with additional instruments (amplifiers), and the larger detection region (due to additional electrodes) may increase particle coincidence events (having two or more particles in detection region).

An integrated spiral microfluidic device (Dean Flow Fractionation, DFF) with on-chip impedance detection for leukocyte phenotyping has been previously developed (Petchakup et al. Lab on a Chip 19, 1736-1746, doi:10.1039/C9LC00250B (2019)). However, also for this device it was found that the use of inertial-based sorting results in particle focusing at two different vertical positions (along channel height) during flow. This adversely affects impedance detection accuracy as same particles/cells located at different vertical positions produce different signal magnitudes.

Therefore, there is still need in the art for further improved method for cell profiling, in particular lymphocyte and neutrophil profiling.

## Summary of the invention

The present invention meets this need by providing a method for label-free blood cell (such as lymphocyte or neutrophil) activation profiling based on (microfluidic) impedance cytometry according to claim 1.

In another aspect the invention also relates to a biosensor for for quantitative label-free cell profiling using impedance cytometry according to claim 12.

All embodiments described above in the context of the method and concerning the microfluidic device and impedance detector as such are similarly applicable to the biosensor of the invention.

In still another aspect, the invention also features an integrated impedance cytometer comprising the biosensor of the invention and further comprising (1) a microchip, (2) an impedance analyzer, and (3) fluidic pumps connected to the sample and sheath fluid inlet to enable perfusion control, wherein the microchip is interfaced with the impedance analyzer and the fluidic pumps and wherein the impedance analyzer is connected to the coplanar electrodes to enable impedance measurements.

Further aspects of the invention are defined in the dependent claims.

## Brief description of the drawings

The invention will be better understood with reference to the detailed description when considered in conjunction with the non-limiting examples and the accompanying drawings.

Figure 1 shows a schematic of integrated cell sorting and detection device with enhanced single stream particle focusing using stepped height sample inlet. The 3D geometry for stepped height inlet is highlighted in dotted box.

Figure 2. CFD simulation showing 3D sample focusing at the inlet region (cross-sectional view) of the spiral device. Black and gray indicate sample streamlines and sheath streamlines respectively. The particles equilibrate at the channel bottom due to inertial focusing and secondary Dean vortices, and remain focused until the detection region (close to the electrodes).

Figure 3 shows characterization of stepped inlet particle focusing. Cross-sectional view of CFD simulations at different sample-to-sheath flow rate ratio (left) and impedance detection of 10 $\mu$m beads to illustrate single particle equilibrium position (right).

Figure 4 shows the effect of stepped height variation of sample inlet on sample streamlines (black dots). The sheath inlet opening is fixed at 100 $\mu$m for every condition.

Figure 5 shows the effect of sample inlet opening width on sample streamlines. The sample inlet height is fixed at 20 $\mu$m for every condition. Gray dots and black dots represent sheath and sample streamlines, respectively.

Figure 6 shows quantification of percentage of sample streamlines in bottom half of the channel which indicates efficiency of sample stream confinement.

Figure 7 shows numerical impedance simulation to study the effect of membrane conductivity on impedance spectrum (top), differential current response (middle) and opacity (bottom) using a double shell model as described in impedance modeling section. Table 1 contains electrical properties of cell components.

Figure 8 shows numerical impedance simulation on the effect of varying nucleus size (top) and nucleus membrane conductivity (bottom). Dotted vertical lines indicate the frequency choice for the system.

Figure 9 shows multi-parametric impedance phenotyping of neutrophils. Neutrophils with different phenotypes were studied in the integrated device. By using multifrequency measurement scheme (0.3 MHz, 1.72 MHz and 12 MHz), different phenotypes can be differentiated based on impedance characteristics namely 1) cell size (impedance at 0.3 MHz), 2) membrane opacity (ratio of impedance at 1.72 MHz to 0.3 MHz) reflecting plasma membrane properties, and 3) nucleus opacity (ratio of impedance at 12 MHz to 0.3 MHz) representing nucleus properties.

Figure 10 shows neutrophil phenotyping using integrated device. Neutrophil phenotypes are 1) untreated control, 2) dead (75$\underline{o}$C heat-treated), 3) Phorbol 12-myristate 13-acetate (PMA) treated for 2 hr (NETosis), and 4) spontaneous NETosis in pH 9. Intensity scale indicates density of single cell events.

Figure 11. Quantification of NETosis population. (A) Impedance gating strategy using nucleus opacity for NETosis quantification (top) and corresponding backgated population on membrane opacity vs electrical size (below). (B) Cell size and (C) nucleus opacity of healthy population and NETosis population. (D) Spontaneous NETosis quantification of neutrophils in different pH environment.

Figure 12. Impedance profiling of neutrophil bacterial response to E. Coli (EC). Neutrophils were treated with different bacteria suspension for 24 hours at 1) 10 times dilution from bacteria stock (EC-10$\times$, OD625: 0.29) 2) $10^3$ times dilution (EC-1k$\times$) 3) $10^6$ times dilution (EC-1M$\times$).

Figure 13 shows workflow of lymphocyte activation profiling using integrated inertial-impedance cytometry. Activated lymphocytes are larger in size and will be sorted into the impedance detection region while healthy lymphocytes (smaller in size) will be sorted into waste at the spiral stage.

Figure 14 shows lymphocyte impedance profiling using integrated inertial-impedance cytometry. (A) Stacked high speed images showing cell focusing at bifurcation of sorting stage and prior impedance detection stage for dead, control and activated lymphocyte populations. (B) Impedance count of activated lymphocytes in respective conditions in 3 mins.

Figure 15 shows scatter plot of forward scattering and side scattering signals of pre-sorted (sample), sorted (from outlet of impedance detector) and waste (from waste outlet of spiral sorter) fractions of lymphocyte sample.

Figure 16 shows lymphocyte activation marker CD137 expression profile of original lymphocyte sample (inlet) and sorted lymphocytes from the impedance outlet.

Figure 17 shows scatter plot of percentage of activated cells in sorted versus pre-sorted fractions; Dotted line indicates 5% activated cells in presorted cells (left). Calibration curve of impedance count versus percentage of activated cells in presorted (sample) from two different donors (right).

Figure 18 shows workflow of antigen-specific T lymphocyte response testing using impedance cytometry comprising of 1) PBMCs isolation and culture with antigens, 2) MACS isolation (CD4 negative selection) of T lymphocytes, and 3) microfluidic impedance profiling.

Figure 19 shows impedance profiles of unstimulated control and stimulated lymphocytes (phytohemagglutinin (PHA) and tuberculin-purified protein derivative (PPD)). n indicates detected impedance cell count (normalized to 100k cells as inlet sample).

Figure 20 shows quantification of activated lymphocytes (CD69+CD137+) in pre- and post-sorting from 3 different donors (left). Representative flow cytometry analysis of pre-sorted (inlet) and sorted (impedance outlet) cells for PPD-treated PBMCs (right).

Figure 21 shows ratio of CD69+CD137+ lymphocytes in stimulated samples (PPD, PHA) normalized to control (unstimulated) in the impedance-sorted fractions (left) by flow cytometry analysis (left). Microfluidic differential impedance count ratio (detected cells in stimulated sample (PHA, PPD) normalized to control (unstimulated)) in the sorted fractions from 4 different donors (right).

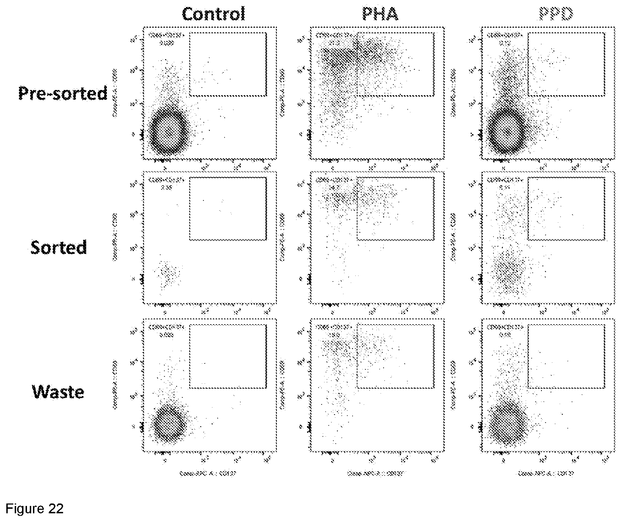

Figure 22 shows representative flow cytometry analysis of lymphocyte populations (control, PHA and PPD treated) in the sample (Pre-sort), and microfluidic-sorted larger (activated) lymphocytes (sorted) and non-activated lymphocytes (waste).

Figure 23 shows impedance activation profiling using peripheral blood mononuclear cell (PBMC) stimulated with PHA. (A) Experimental workflow and (B) stacked high speed images showing sorting of unstimulated control and PHA-stimulated PBMCs. Scale bar is 150 $\mu$m. (C) impedance profiles of sorted lymphocytes for control, PHA and PPD in 3 mins.

Figure 24 shows impedance system prototyping. Microfluidic cytometer setup comprising of fluidic pumps, microfluidic device and PCB chip holder connected to impedance analyzer. Inset image shows close view of the PCB and chip holder.

## Detailed description

The following detailed description refers to, by way of illustration, specific details and embodiments in which the invention may be practiced. These embodiments are described in sufficient detail to enable those skilled in the art to practice the invention. Other embodiments may be utilized and structural and logical changes may be made without departing from the scope of the invention. The various embodiments are not necessarily mutually exclusive, as some embodiments can be combined with one or more other embodiments to form new embodiments.

Unless otherwise defined, all technical and scientific terms used herein have the same meaning as commonly understood by one of ordinary skill in the art. The singular terms "a," "an," and "the" include plural referents unless context clearly indicates otherwise. Similarly, the word "or" is intended to include "and" unless the context clearly indicates otherwise. The term "comprises" means "includes." In case of conflict, the present specification, including explanations of terms, will prevail.

The inventors have developed a label-free, high throughput microfluidic lymphocyte phenotyping assaying method based on impedance signature. This development was made possible by a first characterization of different T-lymphocyte populations (CD4+) where it was observed that those exhibit significant biophysical differences in impedance profiles of healthy, activated (by anti-CD3/CD28 Dynabeads) and dead (treated by 10% DMSO) lymphocytes. Peripheral blood mononuclear cell (PBMCs) stimulation using the mitogenic lectin Phytohemagglutinin (PHA) and the Tuberculin Purified Protein Derivative (PPD) antigen also revealed an increase in lymphocyte cell size (> 8 $\mu$m) which corresponded to lymphocyte activation (CD69+CD137+). As a proof-of-concept for clinical utilization, the inventors then applied the integrated cell sorting and impedance profiling platform for label-free quantitative measurement of activated T-lymphocytes (>8 $\mu$m) and used a stepped height sample inlet to hydrodynamically achieve single cell focusing stream close to coplanar electrodes. This was found to bring several advantages to single cell impedance measurement, namely; 1. well-aligned particle focusing stream which minimizes cell loss during the initial sorting stage, 2. improved signal detection sensitivity due to close proximity of cells to electrodes, and 3. less impedance signal variation due to more confined particle position/height in the bottom half of the channel. These advantages enabled significant enrichment of larger activated T-lymphocytes (~11.7-fold) and electrical detection of low levels of lymphocyte activation (<5%). The integrated microchip was then coupled with magnetic activated cell sorting (MACS) for impedance profiling of activated T-lymphocytes (CD4+) from PHA and PPD stimulated PBMCs. A differential impedance cell count ratio (stimulated/unstimulated) was defined to distinguish activated T-lymphocytes, which showed better sensitivity as compared to immunophenotyping by flow cytometry.

The integrated inertial-impedance cytometry platform described herein offers several key advantages including 1) size-based activated lymphocyte enrichment, and 2) hydrodynamic-based single stream focusing to improve impedance detection sensitivity. When combined with MACS, the platform successfully detected activated CD4 T-lymphocyte response from PBMCs stimulated with PHA and PPD. Collectively, the results reported herein demonstrate the potential of the developed platform for label-free antigen-specific lymphocyte profiling. It is envisioned that the developed technology can be further used for quantitative detection of antigen-specific T-lymphocyte responses as point-of-care testing for infectious diseases (e.g. tuberculosis and COVID19). The label-free cell analysis and continuous collection of eluted cells greatly facilitate downstream bioanalysis to elucidate novel associations between biophysical cellular properties and antigen-specific responses.

The inventors have further discovered that incorporation of a stepped height sample inlet for single stream particle focusing allows enhancing the integrated platform of spiral microfluidics and impedance cytometry. With this novel feature, label-free characterization of different neutrophil phenotypes (healthy, dead, NETosis) based on nucleus and membrane properties could be successfully demonstrated. The developed platform also greatly minimizes sample handling and analysis/testing time with minimal cell perturbation, which represents a key progress towards point-of-care applications.

The methods of the invention allow quantitative label-free cell profiling using impedance cytometry and comprise the following steps:

(i) providing a fluid sample comprising cells;
(ii) perfusing the sample into an impedance cytometer having a first sample inlet and a second sheath fluid inlet and a flow channel, wherein the flow channel comprises coplanar electrodes for generating an electric field across the channel and a means to detect disruptions of said electric field by detecting changes in the electric impedance; and
(iii) measuring changes in the electric impendance for label-free quantitative profiling of cells in said sample.

In various embodiments of the invention, the method of the invention does not comprise (a) a centrifugation step; and/or (b) a labeling step, wherein at least one type of blood cells is labeled with a marker molecule.

The cells profiled are typically blood cells, usually white blood cells, namely myelocytes and/or lymphocytes, with lymphocytes and neutrophils being used as a particular example to demonstrate the feasibility of the method herein. The methods described ans exemplified are thus mainly methods that allow activated lymphocyte or activated neutrophil profiling.

The term "blood cells", as used herein, is meant to include platelets, red blood cells and leukocytes (white blood cells). All white blood cells are nucleated, which distinguishes them from the anucleated red blood cells and platelets. Types of leukocytes can be classified in standard ways. Two pairs of broadest categories classify them either by structure (granulocytes or agranulocytes) or by cell lineage (myeloid cells or lymphoid cells). These broadest categories can be further divided into the five main types: neutrophils, eosinophils, basophils, monocytes, and lymphocytes. These types are distinguished by their physical and functional characteristics. Monocytes and neutrophils are phagocytic. Further subtype classification is well-known in the art.

The terms "lymphocyte cell" or "lymphocyte" as interchangeably used herein, refer to any one of a natural killer (NK) cell, a T cell, a B cell and any combination thereof. Peripheral blood mononucleated (PBMC) cells, tumor-infiltrating lymphocyte (TIL) cells and lymphokine-activated killer (LAK) cells are also considered lymphocyte cells. Non-limiting examples of lymphocytes include cytotoxic lymphocytes (CTLs, CD8$^+$ or CD4$^+$), NK cells (CD2$^+$), and T helper cells (CD4$^+$).

The sample used is therefore typically a blood sample. This sample may be processed before it is used in the inventive method, e.g. by subjecting to various separation, purification and conservation treatments, all of which are well-known to those skilled in the art. For example, the red blood cells may be lysed or otherwise separated from the remainder of the blood sample to increase the concentration of white blood cells and reduce the red blood cell background.

In various embodiments, additional separation steps are carried out to separate subpopulations of white blood cells. For example, for white blood cells which occur in low total numbers in comparison to the predominant neutrophil and lymphocyte populations, such as basophils, eosinophils and monocytes, it may be beneficial to separate not only the red blood cells and platelets, but also the lymphocytes and/or nuetrophils to allow profiling of these cells. The same applies when profiling neutrophils or lymphocytes. In such embodiments, it may not be essential but still beneficial to seperatre the subpopulation not to be assessed from the one being profiled prior to carrying out the methods described herein. Means for separating different subpopulations of leukocytes from each other are well known in the art and some are also described herein below.

The sample may be a finger prick sample or a sample generated from venipuncture.

"Sample" or "patient sample", as used herein, generally includes biological samples such as tissues and bodily fluids. "Bodily fluids" may include, but are not limited to, blood, serum, plasma, saliva, cerebral spinal fluid, pleural fluid, tears, lactal duct fluid, lymph, sputum, urine, amniotic fluid, and semen. A sample may include a bodily fluid that is "acellular". An "acellular bodily fluid" includes less than about 1% (w/w) whole cellular material. Plasma or serum are examples of acellular bodily fluids. A sample may include a specimen of natural or synthetic origin. "Plasma", as used herein, refers to acellular fluid found in blood. "Plasma" may be obtained from blood by removing whole cellular material from blood by methods known in the art (e.g., centrifugation, filtration, and the like). As used herein, "peripheral blood plasma" refers to plasma obtained from peripheral blood samples. "Serum", as used herein, includes the fraction of plasma obtained after plasma or blood is permitted to clot and the clotted fraction is removed. Thus, a serum sample is also acellular. In contrast, the term "whole blood", as used herein, means blood per se collected from a subject such as a human and containing unseparated blood cells. Further, a sample obtained by diluting the whole blood with an appropriate buffer or the like, and/or by adding an additive, such as an anticoagulant or a protease inhibitor, may be used as the whole blood sample. A whole blood sample comprises blood cells, such as platelets, red blood cells and leukocytes. Since the methods disclosed herein are related to profiling of cells, in particular lymphocytes, sample types that typically contain cells are preferred in the sense of the present invention.

"Finger prick sample", as used herein, is a sample of blood consisting of one drop collected from a finger (tip). Preferably, the sample is collected by a small fingertip lancet device capable of painlessly piercing the skin to cause fresh blood flow. Once a hanging droplet of blood is available on the finger a collector can be applied to the droplet and blood can be absorbed by the collector. The volume of the finger prick sample may range from 10-500 μL, preferably 50-300 μL and more preferably 80-150 μL. Alternatively, the blood drop may also be collected from other parts of the body, such as the ear lobe. The features described for finger prick samples similary apply to such blood drop samples collected from other regions of the body.

In various embodiments, the method uses microfluidic impedance cytometry. In such embodiments, step (i) may further comprise providing an impedance cytometer in form of a microfluidic device.

Said microfluidic device may comprise a spiral-shaped flow channel with an inner and an outer wall relative to the center of the spiral and with two inlets and at least two outlets. Typically, one of the two inlets is the sample inlet and the other of the two inlets is the sheath inlet. In some embodiments, the sample inlet is located at the inner wall of the spiral-shaped flow channel and the sheath fluid inlet is located at the outer wall of the spiral-shaped flow channel. The device may comprise more than two inlets, however, in typical setups this is not necessary and thus not preferred. The at least two outlet ports may be at least three or at least four outlet ports, and may be 2, 3 or 4 outlets. In one embodiment, the device has three outlet ports.

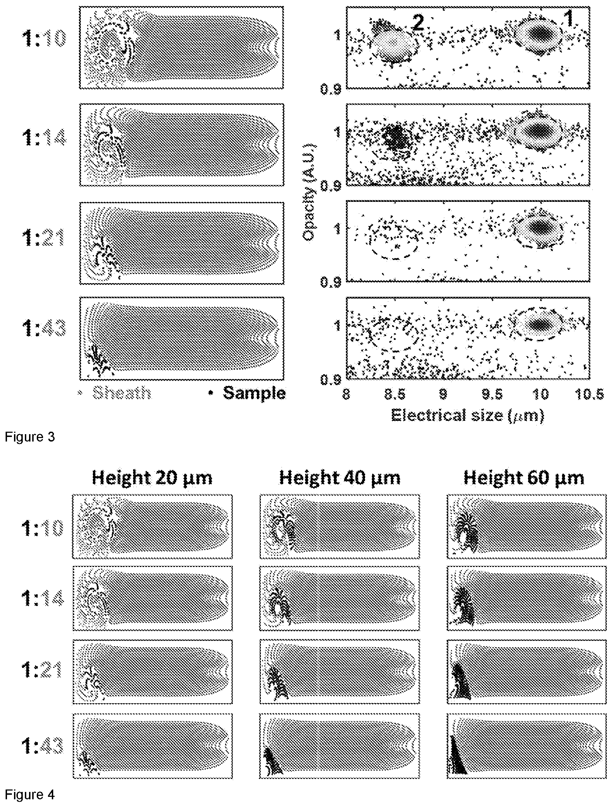

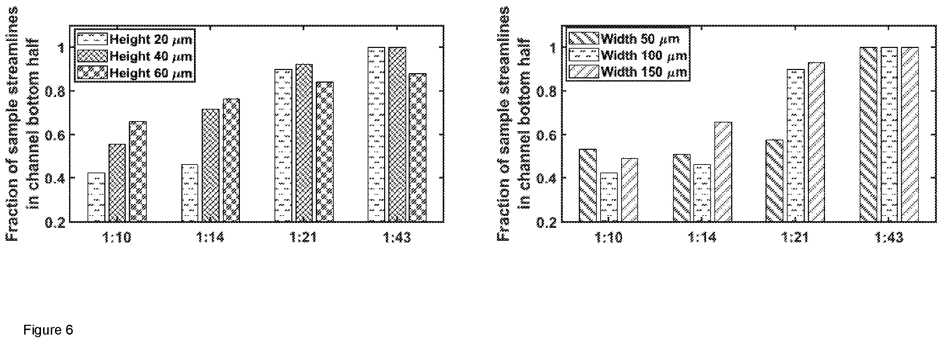

The spiral-shaped flow channel may have at least a first end and a second end, wherein said flow channel has the two inlet ports at or near said first end and the at least two outlet ports at or near said second end, wherein one of the two inlet ports is located at the inner wall of the spiral-shaped flow channel and the other inlet port is located at the outer wall of the spiral-shaped flow channel. The first end may be the inner end of the spiral and the second end the outer end, as schematically shown in Figures 3, 6 and 10.

In these setups of a microfluidic device, the impedance detector comprising the coplanar electrodes required for impedance measurements, in particular direct impedance quantification of lymphocytes is located in at least one of the outlets, typically that outlet to which the cells to be profiled are sorted by the microfluidic device.

In an earlier work of the inventors (WO 2017/003380 A1), which is herein incorporated by reference in its entirety, in particular the passages relating to the microfluidic device, the inventors found that Dean Flow Fractionation (DFF) is qualified to separate blood components and/or microparticles (such as bacteria) present in blood and described how the parameter settings of the microfluidic device need to be adapted for efficient and distinct purification of different cells and particles. This previously reported method was however focused on the purification of neutrophils. The present method use DFF for cell sorting and focusing to allow the following impedance measurements.

The microfluidic cell sorting technology termed Dean Flow Fractionation (DFF) is well-known for size-based separation of diseased cells (Hou et al. Sci. Rep. 3 (2013); Hou et al. Lab Chip 15, 2297-2307 (2015)). DFF is an inertial microfluidics based sorting method which involves the lateral migration of particles or cells across streamlines to focus at distinct positions due to dominant inertial forces ($F_L$) at high flow rates (Reynolds number, Re ~50-100). In DFF systems, fluid flowing through a spiral microchannel experiences centrifugal acceleration directed radially outward, leading to the formation of two symmetrical counter-rotating Dean vortices at the top and bottom halves of the channel. The presence of Dean vortices in spiral microchannels imposes additional lateral Dean drag force ($F_D$) which offers superior separation resolution as both forces ($F_L$ and $F_D$) scale non-linearly with particle size and their superposition (FL/FD) determines the equilibrium position within the channel cross section.

As used herein, the term "flow channel" means a tubular passage for liquids. Preferably, the flow channel is spiral-shaped. As the spiral shape represent an asymmetrical shape, an inner and an outer wall can be defined. As used herein, the expression "microfluidic device" means a physical element that enables the control and manipulation of fluids that are geometrically constrained to a small, typically sub-millimeter scale. "Microfluidic device", as used herein, refers to a device that includes one or more microfluidic flow channels designed to carry, store, mix, react, and/or analyze liquid samples, typically in volumes of less than one milliliter. Representative examples of materials that can be used to make microfluidic devices include, but are not limited to, silicone rubber, glass, plastic, silicon and metals, preferably the microfluidic device is made of polydimethylsiloxane (PDMS).

The term "inlet port", as used herein, is defined as the end of the flow channel, which is first contacted with the sample and the sheath fluid. On the contrary, the term "outlet port" refers to the end of the flow channel, which releases the fluidic material of the sample and the sheath fluid from the microfluidic device, for example into a container it is connected to.

The term "connected to a container", as used herein, relates to the transfer of a fluid recovered in the microfluidic device of the invention to a second storage unit. A "container", in the sense of the present invention, can be a unit whose only function is to store the recovered fluid, but also a device, which allows further purification, such as a column or a filter unit, or analysis of the recovered fluid. The devices used for analysis of the recovered fluid may comprise, but are not limited to FACS devices, mass spectrometry devices, microscopes, centrifuges, PCR thermocycler and a second flow channel comprising a coating, which can be used to carry out functional assays.

The term "sheath fluid", as used herein, refers to a variety of fluids, including aqueous or nonaqueous fluids and/or fluids that may include additional material components, e.g., soluble chemical components or suspensions or emulsions of at least partially insoluble components. Preferably, the sheath fluid is a buffer, preferably a compatible with blood cells, such as phosphate-buffered saline (abbreviated PBS) and other well-known buffers. The term "buffer", as used herein, means an aqueous solution of any compound or combination of compounds that control the pH of the environment in which they are dissolved or dispersed. Concerning the pH value, buffer substances diminish the effect of acids or basis added to the buffer solution. Examples of water-soluble buffer substances include, but are not limited to meglumine, sodium bicarbonate, sodium carbonate, sodium citrate, calcium gluconate, disodium hydrogen phosphate, dipotassium hydrogen phosphate, tripotassium phosphate, sodium tartarate, sodium acetate, calcium glycerophosphate, tromethamine, magnesium oxide or any combination of the foregoing. It is understood that the metal cation may be replaced with another suitable metal cation without changing the buffering properties of the buffer substance. Buffer substances with low water solubility may also be used, typically in combination with other more soluble components. Examples include, without limitation, magnesium hydroxide, aluminum hydroxide, dihydroxy aluminum sodium carbonate, calcium carbonate, aluminum phosphate, aluminum carbonate, dihydroxy aluminum amino acetate, magnesium oxide, magnesium trisilicate, magnesium carbonate, and combinations of the foregoing. Buffers can also be supplemented with auxiliaries, such as salts, detergents, BSA (bovine serum albumin) etc. Concentrations that can be used for each of the above recited buffer substances are well-known in the art.

In the above embodiments of methods using microfluidic devices, step (ii) typically comprises introducing the sample into the sample inlet port at a sample flow rate and introducing a sheath fluid into the sheath inlet at a sheath flow rate. Sample and sheath fluid flow rate are parameters that have impact on the cell sorting properties of the method.

In various embodiments, the sample-to-sheath flow rate ratio is 1:15 or lower, preferably 1:20 or lower, for example in the range of 1:15 to 1:100 or 1:15 to 1:80 or 1:15 to 1:60 or 1:15 to 1:50 or 1:18 to 1:45 or 1:20 to 1:45, for example 1:20, 1:25, 1:30, 1:35, 1:40 or 1:45. In these methods, the sample flow rate may be in the range of from 10 to 400 $\mu$L/min. If the sample to sheath flow rate ratio is low, the sample flow rate is also low to allow this low ratio with having to drastically increase the sheath fluid flow rate. Typical sample flow rates may range from about 1:15 to about 1:250. The sheath fluid flow rate may thus, for example, be in the range of about 200 to about 5000 $\mu$L/min. The flow rates used are typically limited by the dimensions of the flow channel and the microfluidic device.

"About", as used herein in connection with numerical values refers to the referenced numerical value $\pm 10\%$ or $\pm 5\%$.

The sample can be introduced to a flow channel of a microfluidic device by means of a syringe or other means. Other means for introducing a sample into a flow channel of a microfluidic device include microdispensers, e.g., droplet dispensers, such as, for example, injection nozzles; in-channel dispensers, e.g., metering dispensers. Means for introducing samples into a flow channel of a microfluidic device are discussed in greater detail by Nguyen et al. and Li et al. (Nguyen et al., Fundamentals and Applications of Microfluidics, Second Edition, ARTECH HOUSE, INC. (Norwood, Mass.: 2006), pages 395-417; Li et al., Injection Schemes for Microchip-based Analysis Systems, Lab on a Chip Technology, Volume 1: Fabrication and Microfluidics, edited by Herold et al., Caister Academic Press (Norfolk, UK: 2009), pages 385-403). Nguyen et al. discusses microdispensers in detail. Li et al. discusses microdispensers in detail.

The sample inlet may be a stepped sample inlet. "Stepped sample inlet", as used herein, means that the height of the sample inlet is lower than the height of the flow channel, preferably by a factor of at least 2, more preferably 3-10, for example about 4, about 5, about 6, about 7, about 8, or about 9. The sample inlet may be located at the bottom of the flow channel to allow better focusing of the cells. In various embodiments, said stepped sample inlet also means that its height is lower than that of the sheath fluid inlet, typically by the same factor as for the flow channel. In various embodiments, the sheath fluid inlet and the flow channel have a similar or the same height, with the sample inlet being significantly lower to provide for the "step".

The inventors have found that a stepped inlet sample represents a suitable means to hydrodynamically achieve single cell focusing streams close to the coplanar electrodes used for impedance measurements. This brings several key advantages to single cell impedance measurement, namely; 1. well-aligned particle focusing stream which minimizes cell loss during the initial sorting stage, 2. improved signal detection sensitivity due to close proximity of cells to electrodes, and 3. less impedance signal variation due to more confined particle position/height in the bottom half of the channel.

In various embodiments, the sample inlet has a height of 15 to 50 $\mu$m and/or the sheath fluid inlet and flow channel have a height of 80 to 250 $\mu$m. In one example, the sample fluid inlet height is about 20 $\mu$m and the flow channel and optionally also the sheath fluid inlet has a height of about 110 $\mu$m.

In various embodiments of the methods, the opening width of the sheath fluid inlet is in the range of 200 to 700 $\mu$m and /or the opening width of the sample inlet is 50 to 200 $\mu$m, preferably 60 to 180 or 70 to 160 $\mu$m or 80 to 150 $\mu$m. In some embodiments, the aspect ratio of sheath fluid inlet and sample inlet (width to height) is in the range of 3 to 10, preferably 4 to 8. It is generally preferred that the aspect ratio of sample inlet and/or sheat fluid inlet is greater than 1, typically greater than 1.5 or greater than 2. In various embodiments, the area ratio of sheath inlet to sample inlet is in the range of 10 to 50, preferably 20 to 40.

In various embodiments of the invention, the at least two outlet ports are at least three or at least four outlet ports. In some embodiments described herein, the device comprises three outlet ports, with one leading to the impedance detector and the two others being waste outlet ports. In various embodiments, the sample outlet port leading to the impedance measurement is the middle outlet port and the flow properties are adjusted such that the target cells get sorted to this middle outlet port.

In various embodiments, the Reynolds number (Re) of the sample flowing through the spiral-shaped flow channel is 50-100. As used herein, the expression "Reynolds number" means $\rho$u L/$\mu$; wherein $\rho$ represents density of a liquid; u represents velocity of the liquid; L represents characteristic length of a flow channel and $\mu$ represents viscosity of the liquid.

The spiral-shaped flow channel may comprise or consist of polydimethylsiloxane (PDMS). It may have a width of 200 to 700 $\mu$m, such as 300 to 650 or 400 to 600 $\mu$m, preferably about 500 $\mu$m. In various embodiments, it has a height of 110-130 $\mu$m and/or has a total length of 4 to 20, 5 to 15 or 7-13 cm, preferably about 10 cm.

In various embodiments of the device, the at least two outlet ports are two outlet ports. In more preferred embodiments of the above defined two outlet ports device, the first outlet port covers 5-30%, preferably 20%, of the width of the flow channel and the second outlet port covers 70-95% of the width of the flow channel, wherein the first outlet port is located at the inner wall and the second outlet port is located at the outer wall. In various embodiments of the above defined two outlet ports device, the spiral-shaped flow channel (a) comprises or consists of polydimethylsiloxane (PDMS); (b) has a total length of 5-10 cm, preferably 6.5 cm; (c) has a width of 200-400 $\mu$m, preferably 300 $\mu$m; and/or (d) has a height of 30-90 $\mu$m, preferably 60 $\mu$m. In such embodiments, the width of the first outlet port may be 1-50 $\mu$m and the width of the second outlet port may be 51-300 determined from the inner wall to the outer wall.

In other embodiments, the spiral-shaped flow channel (a) comprises or consists of polydimethylsiloxane (PDMS); (b) has a width of 300-600 $\mu$m, preferably 500 $\mu$m; (c) has a height of 100-130 $\mu$m, preferably 110 $\mu$m; and/or (d) has a total length of 7-13 cm, preferably 10 cm. In such embodiments, the device may have three or four outlet ports, for example 3 outlet ports. In various embodiments, the spiral-shaped flow channel gradually expands to a width of 800-1200 $\mu$m at the furcation of the outlet ports. In further various embodiments of the invention, where there are 3-4 outlet ports, the width of the flow channel may be equally divided by three or four to provide for 3 or 4 outlet ports with essentially the same width. The outlet ports are generally arranged horizontally with one being near the inner wall and another one being near the outer wall, relative to the center of the spiral, and any further outlet port being located between those at the inner and the outer wall.

Dimensions of microfluidic devices and the flow channels thereof, and the materials for constructing microfluidic devices and methods for constructing microfluidic devices are described by Nguyen et al., Tabeling, Armani et al., Tsao et al., Carlen et al., Cheung et al., Sun et al. and Waddell (Nguyen et al., Fundamentals and Applications of Microfluidics, Second Edition, ARTECH HOUSE, INC. (Norwood, Mass.: 2006), pages 55-115; Tabeling, Introduction to Microfluidics, Oxford University Press (Oxford, Great Britain: 2005), pages 244-295; Armani et al., Fabricating PDMS Microfluidic Channels Using a Vinyl Sign Plotter, Lab on a Chip Technology, Volume 1: Fabrication and Microfluidics, edited by Herold et al., Caister Academic Press (Norfolk, UK: 2009), pages 9-15; Tsao et al., Bonding Techniques for Thermoplastic Microfluidics, Lab on a Chip Technology, Volume 1: Fabrication and Microfluidics, edited by Herold et al., Caister Academic Press (Norfolk, UK: 2009), pages 45-63; Carlen et al., Silicon and Glass Micromachining, Lab on a Chip Technology, Volume 1: Fabrication and Microfluidics, edited by Herold et al., Caister Academic Press (Norfolk, UK: 2009), pages 83-114; Cheung et al., Microfluidics-based Lithography for Fabrication of Multi-Component Biocompatible Microstructures, Lab on a Chip Technology, Volume 1: Fabrication and Microfluidics, edited by Herold et al., Caister Academic Press (Norfolk, UK: 2009), pages 115-138; Sun et al., Laminated Object Manufacturing (LOM) Technology-Based Multi-Channel Lab-on-a-Chip for Enzymatic and Chemical Analysis, Lab on a Chip Technology, Volume 1: Fabrication and Microfluidics, edited by Herold et al., Caister Academic Press (Norfolk, UK: 2009), pages 161-172; Waddell, Laser Micromachining, Lab on a Chip Technology, Volume 1: Fabrication and Microfluidics, edited by Herold et al., Caister Academic Press (Norfolk, UK: 2009), pages 173-184).

In various embodiments, the spiral-shaped flow channel gradually expands, for example to a width of 800-1200 $\mu$m, at the furcation of the outlet ports. In some embodiments, the expanded width is about 1000 $\mu$m. As used herein, the term "furcated' means divided into branches. As used herein, the term "branch" means a limited part of a larger or more complex body, i.e., a smaller flow channel emerging from a primary flow channel or entering or re-entering a primary flow channel. As used herein, the term "primary flow channel" or "first flow channel" means a flow channel through which at least a majority of the sample flows.

In various embodiments of the invention where 4 outlet ports are used, the first outlet port covers the width 0-100 $\mu$m, the second outlet port covers the width 101-250 $\mu$m, the third outlet port covers the width 251-650 $\mu$m and the fourth outlet port covers the width 651-1000 $\mu$m of the flow channel defined from the inner wall towards the outer wall. In alternative embodiments of the invention, the first outlet port covers 1-20% of the width of the flow channel, the second outlet port covers 10-20% of the width of the flow channel, the third outlet port covers 30-50% of the width of the flow channel and the fourth outlet port covers 25-45% of the width of the flow channel, wherein the order of the outlet ports 1-4 is defined from the inner wall towards the outer wall.

Step (ii) may, in the embodiments employing the microfluidic device, comprise the step of driving said sample and sheath fluid through the spiral-shaped flow channel for cell sorting and focusing.

The sample can be driven by the force of capillary action. Alternatively, the sample can be driven a pump, by electrical forces, or by other means for driving samples. The same applies to the sheath fluid, which is however, typically not drived by capillary action but rather by active means, such as a pump. Suitable pumps include, but are not limited to, rotary (centrifugal) pumps; peristaltic pumps; and ultrasonic pumps. Electrical forces include, but are not limited to, electrohydrodynamic forces; electrokinetic forces, e.g., electrophoresis, electro-osmosis; and surface tension driven, e.g., electrowetting, electrowetting on dielectric surface. Means for driving samples are discussed in greater detail by Nguyen et al., Erickson et al., Grover et al., Hunt et al. and Bersano-Begey et al. (Nguyen et al., Fundamentals and Applications of Microfluidics, Second Edition, ARTECH HOUSE, INC. (Norwood, Mass.: 2006), pages 255-309; Erickson et al., Introduction to Electrokinetic Transport in Microfluidic Systems, Lab on a Chip Technology, Volume 1: Fabrication and Microfluidics, edited by Herold et al., Caister Academic Press (Norfolk, UK: 2009), pages 231-248; Grover et al., Monolithic Membrane Valves and Pumps, Lab on a Chip Technology, Volume 1: Fabrication and Microfluidics, edited by Herold et al., Caister Academic Press (Norfolk, UK: 2009), pages 285-317; Hunt et al., Integrated Circuit/Microfluidic Chips for Dielectric Manipulation, Lab on a Chip Technology, Volume 2: Biomolecular Separation and Analysis, edited by Herold et al., Caister Academic Press (Norfolk, UK: 2009), pages 187-206, Bersano-Begey et al., Braille Microfluidics, Lab on a Chip Technology, Volume 2: Biomolecular Separation and Analysis, edited by Herold et al., Caister Academic Press (Norfolk, UK: 2009), pages 269-285). Nguyen et al. discusses microvalves, micropumps, microflow sensors, microfilters and microseparators in detail. The chapters in Herold et al. discuss valves, pumps, and separation in detail.

Step (iii) then comprises the step of quantitatively profiling the cells, preferably activated lymphocytes, by channeling the sorted and focused cells of step (ii) towards the impedance detector by driving the sorted and focused lymphocytes into the at least one outlet comprising the impedance detector, i.e. the coplanar electrodes used for impedance measurements, and determining the impedance signal readout.

In various embodiments, the impedance measurement is carried out a low frequencies in the range of 0.1 to 1 MHz, preferably 0.2 to 0.8 or 0.2 to 0.6 MHz, to determine cell size. In various embodiments, said measurements may be supplemented by additionally carrying out impedance measurement at high frequencies in the range of >1 to 20 MHz, preferably 1.2 to 15.0 or 1,2 to 12.0 MHz, to determine electrical opacity. Electrical opacity can be calculated as the ratio of impedance signal magnitude at high frequency (>1 to 20 Mhz) to impedance signal magnitude at low frequency (0.1 to 1 MHz). Electrical opacity (1.72MHz/0.3MHz) will reflect cell membrane electrical properties, while electrical opacity (12MHz/0.3MHz) will reflect nucleus electrical properties. In various embodiments, the measurements can be carried out at two higher frequency ranges, one to determine membrane properties (>1 to 10 MHz, preferably 1.2 to 8 MHz or 1.3 to 5 Mhz or 1.3 to 3 MHz) and one to determine nucleus properties (>10 to 20 MHz, preferably 10.5 to 15 Mhz or 10.5 to 13 Mhz). The first of this higher frequency bands is thus also referred to as being used to determine membrane opacity, while the second is used to determine nuclear opacity. The higher frequency range indicated, namely >10 to 20 MHz can also be used to determine properties of intracellular structures, for example to assess phagocytosis. It has also been found that this high frequency range allows to profile neutrophils to identify those undergoing NETosis, as this is accompanied by nuclear swelling. In various embodiments, the measurement at the above-indicated low frequency range can be combined with any one of the two higher frequency ranges in order to allow determination of membrane properties or nucleus properties or both higher frequency ranges to determine both. In various embodiments, the impedance measurement is thus carried out at a frequency of 0.1 to 1 Mhz, preferably 0.2 to 0.6 MHz, and, optionally, at a frequency of >1 to 10 Mhz, preferably 1.3 to 5 Mhz, and/or a frequency of >10 to 20 MHz, preferably 10.5 to 13 Mhz.

After step (iii) the cells may be discarded or collected in containers connected to the respective outlet ports. This allows further use and/or analysis of the sorted cells.

The methods of the invention may further comprise a step of conducting magnetic activated cell sorting (MACS) prior to impedance profiling in steps (ii) and (iii). This may, for example, be achieved by incubating the sample with magnetic beads that bind to undesired cells and separating the magnetic beads with the undesired cells bound thereto from unbound cells by a magnetic field. Such undesired cells may include myelocytes, such as monocytes, in particular if the method is for lymphocyte profiling. To allow such cell sorting the magnetic beads are typically coated with a compound or ligand that is only bound by a specific type of cells. Said compound may, in various embodiments, be an antibody or antibody-like molecule.

In various embodiments of the invention, the method of the invention does not comprise a labeling step, wherein at least one type of blood cells is labeled with a marker molecule. The term "labeling", as used herein, denotes the attachment or incorporation of one or more detectable markers (or "labels") into a cell, protein and/or peptide used in the invention. The terms "marker molecule" or "detectable marker", as interchangeably used herein, refer to any compound that comprises one or more appropriate chemical substances or enzymes, which directly or indirectly generate a detectable compound or signal in a chemical, physical or enzymatic reaction. As used herein, the term is to be understood to include both the labels as such (i.e. the compound or moiety bound to the protein and/or peptide) as well as the labeling reagent (i.e. the compound or moiety prior to the binding with the peptide or protein). A label used in the present invention may be attached to an amino acid residue of a protein and/or peptide via a covalent or a non-covalent linkage. Typically, the linkage is a covalent linkage. The labels can be selected inter alia from isotopic labels, isobaric labels, enzyme labels, colored labels, fluorescent labels, chromogenic labels, luminescent labels, radioactive labels, haptens, biotin, metal complexes, metals, and colloidal gold, with isotonic labels and isobaric labels being particularly preferred. All these types of labels are well established in the art.

The invention also encompasses the microfluidic devices disclosed herein. In one embodiment, it relates to a biosensor for for quantitative label-free cell profiling using impedance cytometry, the biosensor comprising:

(i) a microfluidic device comprising a spiral-shaped flow channel with an inner and an outer wall relative to the center of the spiral and with two inlets and at least two outlets, wherein one of the two inlets is the sample inlet and is located at the inner wall of the spiral-shaped flow channel and the other of the two inlets is the sheath inlet and located at the outer wall of the spiral-shaped flow channel; and

(ii) coplanar electrodes for direct impedance quantification of cells, said coplanar electrodes integrated with at least one of the outlets of the microfluidic device.

The term "biosensor", as used in this context, relates to the microfluidic devices described herein and also defined below which comprise means to carry out impedance measurements of the sorted cells.

All embodiments described above in the context of the method and concerning the microfluidic device and impedance detector as such including dimensions and parts are similarly applicable to the biosensor of the invention.Accordingly, in various embodiments, the biosensor comprises a sample inlet that is a stepped sample inlet in that the height of the sample inlet is lower than the height of the sheath fluid inlet and the flow channel, preferably by a factor of at least 2, more preferably 3-10, and wherein the sample inlet is optionally located at the bottom of the flow channel.

In various embodiments of the biosensor, the sample inlet has a height of 15 to 50 $\mu$m and the sheath fluid inlet and flow channel have a height of 80 to 250 $\mu$m. The opening width of the sheath fluid inlet may be in the range of 200 to 700 $\mu$m and /or the opening width of the sample inlet may be 50 to 200 $\mu$m, preferably both dimension ranges are met. The aspect ratio of sheath fluid inlet and sample inlet (width to height) is preferably in the range of 3 to 10, more preferably 4 to 8. In various embodiments, the area ratio of sheath inlet to sample inlet is in the range of 10 to 50, preferably 20 to 40. The spiral-shaped flow channel may have a total length of 4 to 20, 5 to 15 or 7 to 13 cm, preferably about 10 cm.

Such biosensors/microfluidic devices may be used for sorting and profiling of both neutrophils and lymphocytes, preferably in setups in which the respective other cell population is removed before the sample in introduced in the sample inlet of the device.

Another aspect is an integrated impedance cytometer comprising the biosensor of the invention and further comprising one or more, preferably all of, (1) a microchip, (2) an impedance analyzer, and (3) fluidic pumps connected to the sample and sheath fluid inlet to enable perfusion control, wherein the microchip is interfaced with the impedance analyzer and the fluidic pumps and wherein the impedance analyzer is connected to the coplanar electrodes to enable impedance measurements. The integrated impedance cytometer may further comprise a software to operate the cytometer.

The realization of an integrated platform featuring continuous, label-free cell separation and impedance profiling on a single chip is of great commercial interest with a wide range of clinical applications including immunology studies, cancer diagnostic, and point-of-care and immune health profiling. This technology offers single step label-free cell separation and impedance analysis with minimal human handling. It is also possible to integrate the developed platform with other cell-based platforms for multi-parametric studies. With all the features of this integrated platform, it can be developed into a product for immunology research and point-of-care testing market.

All embodiments disclosed above in relation to the methods of the invention similarly apply to the biosensor and impedance cytometer of the invention and vice versa.

The present invention is further illustrated by the following examples. However, it should be understood, that the invention is not limited to the exemplified embodiments.

**Examples**

**Materials and Methods**

Device design, fabrication and operation

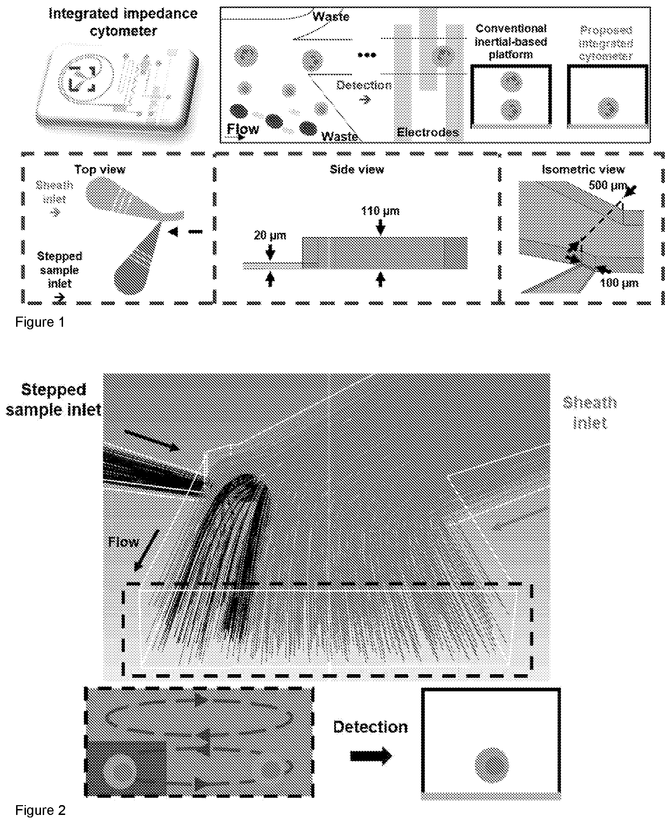

The device schematic is shown in Figure 1A. Briefly, it consists of three stages namely (1) spiral cell sorter, (2) inertial cell focuser, and (3) impedance detector using coplanar electrodes. It was based on a previous integrated platform for leukocyte (~8 to 10 $\mu$m) studies, with the details for impedance cytometers being described in previous literature (Petchakup et al. (2019), supra; Petchakup et al. (2018), supra).

To further improve the impedance detection sensitivity and consistency, we added a stepped sample inlet to hydrodynamically confine sample flow to the lower half of the channel using a sheath fluid (Figure 1B). Under the influence of inertial coupled Dean flow migration in spiral microchannels, the larger cells (particle size ($A_p$) to hydrodynamic diameter ($D_h$) > 0.07) equilibrate near the channel bottom (closer to electrode surface) for neutrophil sorting and impedance detection (Figure 1B).

To realize the stepped sample inlet in the device, double-layered photolithography for SU-8 master fabrication was employed where the first layer (~20 $\mu$m in height) was to define sample inlet and detection region (30 $\mu$m in width) and the second layer was aligned on top of the first layer to define the rest of the device (~110 $\mu$m in height). The area ratio between sheath inlet (500 $\mu$m in opening width) and stepped height sample inlet (100 $\mu$m in opening width) was ~27.5. For the integrated platform, the optimal flow rate sample and sheath flow rate were 80 $\mu$L/min and 1680 $\mu$L/min (1:21), respectively. Polydimethylsiloxane (PDMS) was casted on the SU-8 masters to create microfluidic devices which will be bonded on the glass with patterned coplanar gold electrodes (20 $\mu$m in width, 20 $\mu$m in gap and 200 nm in thickness).

Prior to any experiment, devices were coated with 1% bovine serum albumin (BSA, Biowest) in phosphate buffered saline (PBS, Lonza) for at least 1 hour to prevent non-specific adhesion to the device. The sample and sheath (both in 0.1% BSA in PBS) were loaded to the device, and perfused by syringe pumps (PHD ULTRA™, Harvard Apparatus).

Before electrical measurement and high-speed imaging, the sample and sheath were perfused for 1 min to allow the flow to reach stabilized state. During experiments, the platform was mounted on an inverted microscope (Nikon Eclipse Ti). High-speed images were taken using Phantom V9.1 (AMETEK).

Measurement setup and data presentation

Differential measurement with three electrodes was employed for single cell impedance profiling. The middle electrode was used to apply excitation signal of 1 V at three different frequencies (0.3 MHz, 1.72 MHz and 12 MHz) by a lock-in amplifier (HF2LI, Zurich instrument). Current responses from side electrodes were converted into voltage by transimpedance amplifiers (DHPCA-100, FEMTO®) with transimpedance gain of 10 kV/A and fed back to lock-in amplifier where magnitudes and phases at applied frequencies were extracted at a sampling rate of 230 ksample/s. The time-series impedance responses were recorded for 3 min and were processed to extract to magnitude peaks which correspond to single particle events. By spiking reference beads (10 $\mu$m beads), electrical size of cells can be determined ($|Z_{LF}| \alpha$ electric size[3]) as shown in previous literature (Caselli et al., supra ) and the data calibration was performed to compute electrical size and normalized opacity (particle opacity normalized by opacity of reference beads, Petchakup et al. (2019), supra). Lastly, 2D scatter plots of electrical size ($\mu$m) versus normalized opacity were plotted to illustrate an impedance profile of cell population. Data processing was done using a custom-made program written in MATLAB (MathWorks).

Sample preparation

Blood samples of healthy donors were collected by venipuncture into sodium citrate vacutainer (BD) for experiments after informed consent. To isolate primary neutrophils, the whole blood sample were layered on PolymorphPrep™ at 1:1 ratio. After density centrifugation according to manufacturer's protocol, the neutrophils were collected and washed with 0.5$\times$ PBS. Following that RBC lysis was performed to further remove RBCs. RBC lysis buffer (eBioscience) was added into neutrophil pellet (1 mL) for 3 min and quenched with 0.5% BSA in PBS. The neutrophils were washed and resuspended in 0.1% BSA in PBS.

To extract peripheral blood mononuclear cells (PBMCs), whole blood was subjected to Ficoll-Paque™ Plus (GE Healthcare) density centrifugation according to manufacturer's protocol. For experiments that required purified lymphocytes, Human CD4 T Cell negative isolation kit (STEMCELL) was used to eliminate other residual immune cell populations prior or after culturing.

For comparison across different experiments and devices, the 10 $\mu$m polystyrene beads (Polysciences) were spiked into samples ($10^4$- $10^5$ beads/mL) to serve as a reference as they have consistent dielectric properties.

Lymphocyte activation using CD3/CD28 Dynabeads

Dynabeads Human T-Activator CD3/CD28 (Thermofisher) was used for lymphocyte activation. Briefly, lymphocytes were cultured on a well plate with anti-CD3/CD28 beads at a cell-to-bead ratio of 1:1 with 30 U/mL rIL-2 and maintained in a humidified $CO_2$ incubator at 37°C. After 24 hours, cells were collected, and magnet was used to remove the activators. Following that, the cells were resuspended into 0.1% BSA in PBS at desire concentrations. For the untreated control samples, lymphocytes were cultured without the activators and rIL2.

PHA and PPD stimulation

Isolated PBMCs were first seeded on a 24-well plate at a concentration of $2 \times 10^6$ cells/ml and incubated for 24 h at 37°C in RPMI 1640 media (Hyclone) supplemented with 10% fetal bovine serum (FBS, Gibco) and 1% penicillin-streptomycin (P/S, Life Technologies). For activation experiments, PHA (final concentration 2.5 $\mu$g/ml, Sigma) or PPD (final concentration 10 $\mu$g/ml, Statens Serum Institute, Denmark) were added in the medium to activate lymphocytes. After the desired time points, the cells were harvested and resuspended in recommended MACs buffer. CD4 lymphocyte MACs negative isolation was used to remove other immune cell populations. Following that, the cells were resuspended in 0.1% BSA in PBS at concentration of ~5 - $50 \times 10^4$ cells/mL for impedance measurement.

Neutrophil activation

To study effect of different pH on neutrophil biophysical properties, neutrophils resuspending in RPMI with different pH were incubated in 2 h at 4°C. For bacterial study, neutrophils were incubated with different bacteria concentrations in RPMI without Penicillin-Streptomycin (PS) in orbital shaker for 24 h.

Flow cytometry analysis

To assess the lymphocyte activation status, the different cell fractions were stained for 15 minutes on ice with CD3-BUV737, CD4-BV650 (BD Biosciences, USA), CD137-PE, and CD69-FITC (Thermofisher, USA) antibodies. The cells were washed once to remove unbound antibody and then analysed on a BD LSR Fortessa X-20 flow cytometer (BD Biosciences). Cell sorting was performed on a BD FACSFusion cell sorter (BD Biosciences). FlowJo™ (BD Biosciences) was used to analyze and quantify flow cytometric data.

Statistical analysis

All statistical analysis was performed using GraphPad Prism V8.0 (GraphPad software).

Study approval

Written informed consent was obtained for all subjects during recruitment. All protocols were approved by the institutional review board of Nanyang Technological University (IRB-2014-04/27 and IRB-2018-10-015-02), Tan Tock Seng Hospital (2014/00416) in compliance with the Human Biomedical Research Act (Ministry of Health, Singapore). Blood samples were collected from venipuncture into a 4 mL sodium citrate or lithium heparin tube (BD Vacutainer) of healthy donors for experiments.

Impedance modeling

To understand the effect of membrane conductivity in impedance signal, a single cell with different membrane conductivities using a double shell model based on Maxwell's mixture theory (MMT) (Sun et al., IET Nanobiotechnology, 2007, 1, 69-79; Sun & Morgan, Microfluidics and Nanofluidics, 2010, 8, 423-443) was modelled. In this model, the spherical cell is suspended in the channel center between an excitation electrode and a sensing electrode. The impedance of the mixture is given by following formula,

$$Z^*_{mix} = \frac{1}{j\omega \varepsilon^*_{\mathrm{mix}} lG} \qquad (1)$$

where $\varepsilon^* = \varepsilon - j\frac{\sigma}{\omega}$ denotes complex permittivity given permittivity ($\varepsilon$) and conductivity ($\sigma$), $j^2 = -1$, $\omega$ is the angular frequency, and $\varphi$ is the volume fraction which is the ratio of volume of cell to volume of medium inside the detection channel.

The subscript "mix" represents mixture. *l* is width of the channel. *G* is a cell constant to account for the non-uniform fringing electric field[1]. The calculation of complex permittivity of the mixture is based on following formula,

$$\varepsilon_{mix}^* = \varepsilon_{med}^* \frac{2(1-\varphi) + (1+2\varphi)\frac{\varepsilon_{cell}^*}{\varepsilon_{med}^*}}{(2+\varphi) + (1-\varphi)\frac{\varepsilon_{cell}^*}{\varepsilon_{med}^*}} \qquad (2)$$

where $\varphi$ is the volume fraction and is the ratio of volume of cell to volume of medium inside the detection channel. The subscript "mix", "cell" and "med" denote mixture, cell and medium, respectively. To account for a cellular structure, the complex permittivity of cell can be calculated as a function of internal components (membrane, cytoplasmic contains and nucleus) as follows,

$$\varepsilon_{eff}^* = \varepsilon_{out}^* \frac{2(1-\vartheta) + (1+2\vartheta)\frac{\varepsilon_{in}^*}{\varepsilon_{out}^*}}{(2+\vartheta) + (1-\vartheta)\frac{\varepsilon_{in}^*}{\varepsilon_{out}^*}} \qquad (3)$$

where $\varepsilon_{eff}^*$ is the effective complex permittivity of 2 adjacent components (for example, membrane and cytoplasm) and $\vartheta$ is the volume fraction which is the ratio of volume of inner component to volume of outer component. The subscript "in" and "out" represent inner component and outer component respectively. In this model, we first calculate effective complex permittivity of nucleus using complex permittivity of nucleus envelope and nucleoplasm, followed by calculating effective complex permittivity of cytoplasmic contain using complex permittivity of cytoplasm and nucleus. Lastly, the complex permittivity of cell can be computed using complex permittivity of cytoplasmic contain and membrane.

For the microfluidic device design, a three-electrodes design for differential measurement was employed to minimize common-mode noises and signal drifting. Differential current response $I_{diff}^* = I_{mix}^* - I_{med}^*$) is computed to simulate current readouts when a cell is in between first and second electrodes ( $I_{mix}^*$ ) and only medium is present in between second and third electrodes ( $I_{med}^*$ ). Electrical opacity is defined as a ratio of current response at high frequency to low frequency (0.3 MHz).

**Table 1 Impedance Modelling parameters**

| Detection region dimension | |
|---|---|
| Width of the channel, width of the electrode | 30 $\mu$m |
| Height of the channel | 20 $\mu$m |
| Separation gap between electrode pair | 20 $\mu$m |
| **Cell parameters[3]** | |
| Cell radius (R) | 6 $\mu$m |
| Nucleus radius (Rne) | 3.5 $\mu$m |
| Thickness of cell membrane (d) | 8 nm |
| Thickness of nucleus envelope (dne) | 20 nm |
| Permittivity of cell membrane ($\varepsilon_{mem}$) | 6.2 $\varepsilon_0$ |
| Conductivity of cell membrane ($\sigma_{mem}$) | $10^{-11}$ S/m |
| Permittivity of cytoplasm ($\varepsilon_{cp}$) | 60 $\varepsilon_0$ |
| Conductivity of cytoplasm ($\sigma_{cp}$) | 0.3 S/m |
| Permittivity of nucleus envelope ($\varepsilon_{ne}$) | 28 $\varepsilon_0$ |
| Conductivity of nucleus envelope ($\sigma_{ne}$) | $6 \times 10^{-3}$ S/m |
| Permittivity of nucleoplasm ($\varepsilon_{np}$) | 52 $\varepsilon_0$ |
| Conductivity of nucleoplasm ($\sigma_{np}$) | 1.35 S/m |

(continued)

| Medium parameters | |
|---|---|
| Permittivity of medium | 80 $\varepsilon_0$ |
| Conductivity of medium | 1.6 S/m |
| **Constant** | |
| Permittivity of free space ($\varepsilon_0$) | $8.854 \times 10^{-12}$ F/m |

Computational fluid dynamics

The computation fluid dynamics simulation was conducted using Ansys FLUENT (Ansys, Canosburg, PA, USA). Partial spiral channel with channel length truncated after half loop from inlet bifurcation was simulated. It is assumed that the downstream flow after truncated region with equivalent channel length of 76 times hydraulic diameter (180.32 $\mu$m) has negligible effect on the streamline profile at the inlet bifurcation. Pressured based solver was used to simulate steady state laminar flow using water as medium to mimic sheath fluid of PBS. Boundary conditions were set to stationary wall with no-slip condition at channel wall, velocity inlet at both inlets and zero gauge pressure outlet at the outlet. Full hexahedral mesh with element dimension of 3.5 $\mu$m along height direction, 8.5 $\mu$m along width directions, and 310 $\mu$m along length direction was generated using ICEM (Ansys., Canosburg, PA, USA). Mesh refinement study was conducted by refining the entire mesh by 1.5 times, resulting number of nodes increased from 152680 nodes to 432832 nodes. Velocity profiles along channel height at different cross-sectional region of spiral channel were compared between original mesh and refined mesh. The difference of peak velocity between meshes was controlled below 8% and simulation result of the mesh with 152680 nodes was chosen for analysis in this study. Streamlines were initiated at sample inlet using discrete phase model (DPM) and interaction between particles and continuous phase was disabled to mimic the dynamics of fluid streamlines. The coordinates of streamlines were later exported and processed with MATLAB (Mathworks®, USA).

**Results and discussion**

Example 1: Characterization of stepped inlet

To determine the optimal sample pinching effects, different sample-to-sheath flow rate ratios were first characterized using computational fluid dynamic (CFD) simulation (Fig. 2 & 3). At a flow rate ratio 1:10 (160 $\mu$L/min:1600 $\mu$L/min), sample streamlines (black), which indicate cells/particles flow, spread equally on both top and bottom halves of the channel. With increasing flow ratio (1:21), particle streamlines were hydrodynamically confined to the lower half of the channel. The simulation results based on impedance characterization of 10 $\mu$m beads (similar in size to neutrophils) were further validated (Fig. 3). At flow rate ratios of 1:10 and 1:14, two distinct clusters in the impedance profile were observed as particles (initially unconfined) were inertially focused into two different equilibrium positions (top and bottom half of the channel) in the spiral channel. Conversely, at higher flow rate ratio conditions (1:21 and 1:43), a single cluster was present which indicated successful particle focusing at the lower half of channel. These results highlight the critical importance of single stream particle focusing for improved impedance detection as particles also remained aligned close to the electrodes. Based on these results, a flow rate ratio of 1:21 (80 $\mu$L/min:1680 $\mu$L/min) was used for subsequent experiments.

The stepped sample inlet design is 20 $\mu$m in height (same as detection channel) to simplify the fabrication process to a double-layer photolithography. Additional CFD simulations were performed to understand how stepped sample inlet parameters (width and height) affect 3D focusing (Fig. 4-6).

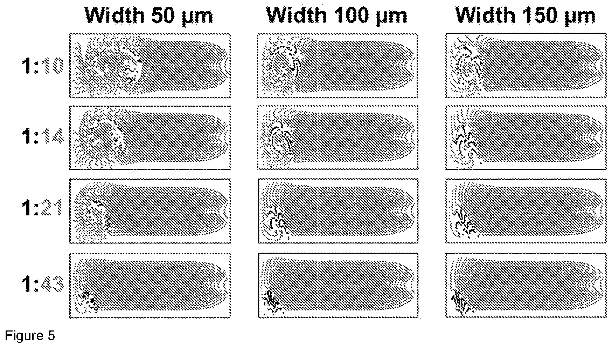

By varying stepped inlet height from 20 to 60 $\mu$m (Fig. 4), both 20 $\mu$m and 40 $\mu$m height were comparable to confine sample streamlines to bottom half of the channel (>90%) at a flow rate ratio of 1:21. Lower stepped inlet height (< 20 $\mu$m) was not included in this study because it is not feasible for cell processing and prone to clogging. In term of opening width, a small opening width (50 $\mu$m) led to the formation of high velocity stream (Fig. 5) and extreme mixing of sample and sheath fluids. This resulted in more dispersed sample streamlines (~50% for 1:21) as compared to larger opening width (> 100 $\mu$m).

Example 2: Integrated cell sorting and impedance cytometry for neutrophil activation profiling

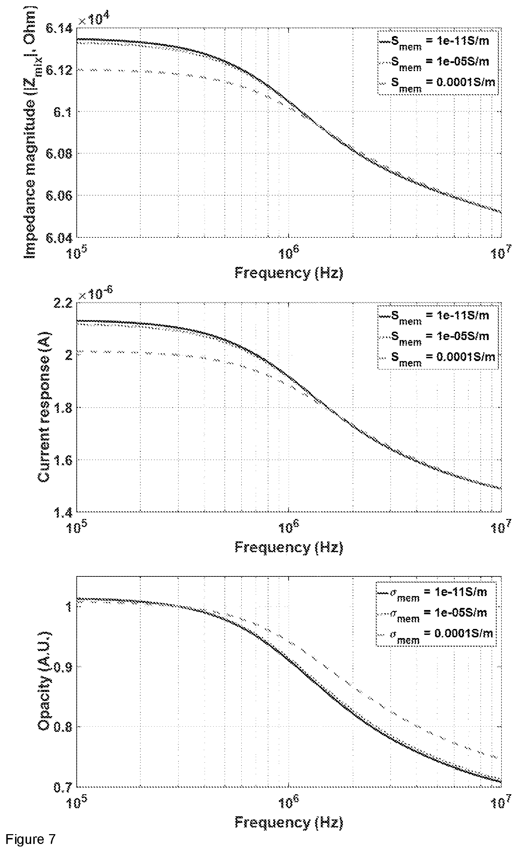

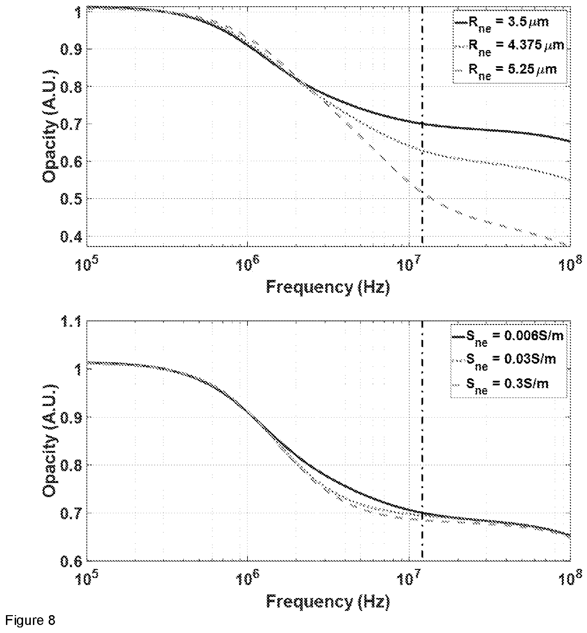

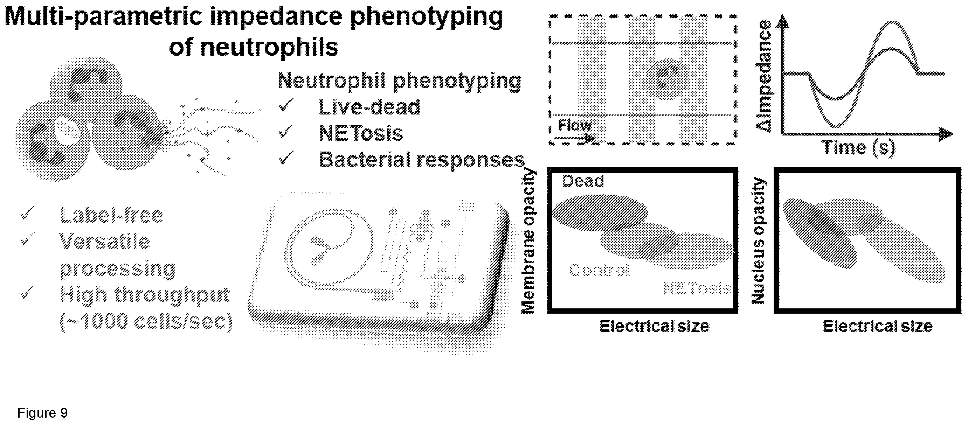

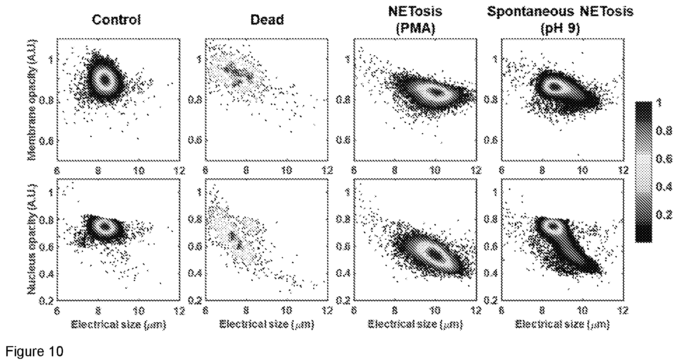

Triple frequencies measurement scheme (0.3 MHz, 1.72 MHz and 12 MHz, 1 V for each frequency) was employed to capture three electrical characteristics of each cell: 1) impedance signal magnitude at 0.3 MHz which indicates cell size. 2) membrane opacity defined as ratio of impedance signal magnitude at 1.72 MHz to impedance signal magnitude at 0.3 MHz reflecting the cell membrane capacitance, and 3) nucleus opacity defined as ratio of impedance signal magnitude at 12 MHz to impedance signal magnitude at 0.3 MHz reflecting nucleus properties. Numerical impedance simulation was performed to study the effect of varying nucleus parameters (nucleus membrane, nucleus size) on opacity spectrum (Fig. 8). Opacity is defined as the ratio between impedance response at different frequencies and impedance response at 0.3 MHz. As certain biological events such as apoptosis or necrosis can lead to degradation of nuclear envelope (Lindenboim et al., 2020, 6, 29; Kwon et al., Scientific Reports, 2015, 5, 15623), the effect of varying conductivity of nucleus envelope was studied and it was observed that opacity increased as the conductivity increases (8). For neutrophil undergoing NETosis, they exhibit characteristic nucleus changes such as nuclear swelling (Li et al. EMBO reports, 2020, 21, e48779). To understand if the electrical measurement can capture changes associated with nucleus size, the variation of nuclear size was performed, and it was found that the opacity decreases as the nucleus size increases (8). Based on these simulations, impedance measurement at 12 MHz were performed to represent the changes of nucleus electrical properties. To illustrate particle distribution, density scattered plots are used to represent electrical parameters of a cell population. As a proof-of-concept for clinical testing (Fig. 9), the platform was utilized for characterization of different neutrophil phenotypes (1. control, 2. dead (incubated at 75ºC), 3. NETosis by Phorbol 12-myristate 13-acetate (PMA) and 4. spontaneous NETosis in high pH medium (pH9)). A comparison between dead and control neutrophils (Fig. 10) reveals that dead cells exhibit small electrical size and high membrane opacity probably due to high membrane conductivity (Fig. 7) resulting from compromised/leaky membrane which is a hallmark of cell death.

Next the platform was utilized to study neutrophils undergoing NETosis which is newly discovered neutrophil function where they release their nucleus with antimicrobial substances to resolve an infection. By treating PMA for 2 hr, neutrophils undergoing NETosis became larger in electrical size with lower membrane opacity (due to increase cell surface area) and nucleus opacity (changes in nucleus morphology (Yipp& Kubes, Blood 122, 2784-2794, doi:10.1182/blood-2013-04-457671 (2013)). As PMA is a potent NETosis inducer (Tatsiy& McDonald Frontiers in Immunology 9, doi:10.3389/fimmu.2018.02036 (2018)), we next determined if our integrated platform can be used to detect presence of NETosis induced by pH change. We suspended neutrophils in high alkaline solution (pH 9) to promote spontaneous NETosis (Khan et al. Frontiers in Medicine 5, doi:10.3389/fmed.2018.00019 (2018)).

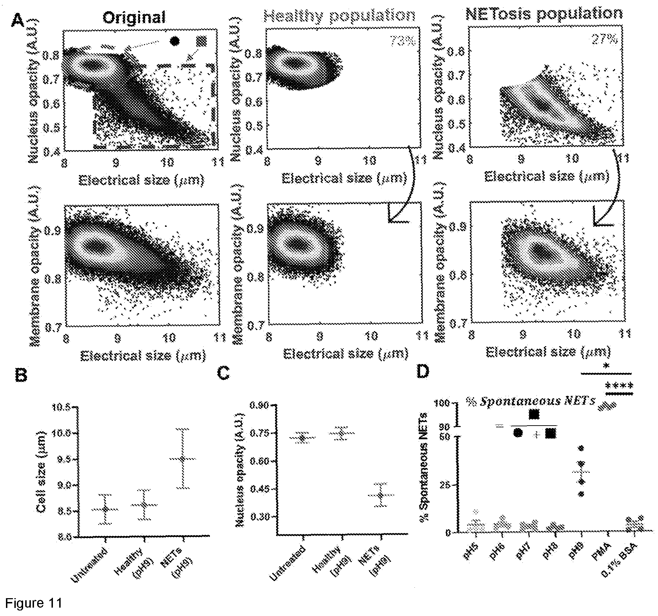

The results show that the changes in electrical characteristics for pH 9 sample was less than PMA stimulus as evident in a presence of tail region towards larger cell size and slightly lower membrane opacity (~0.8). Interestingly, in term of nucleus opacity, a main population which exhibited close impedance characteristics to control sample and a long tail region (ranging from 0.4 - 0.7) was observed which indicates presence of spontaneous NETosis (similar to PMA treatment). Next, quantification of healthy population and NETosis population as shown in Fig. 11 was performed and it was found that nucleus opacity provides better segregation of NETosis population as compared to membrane opacity.

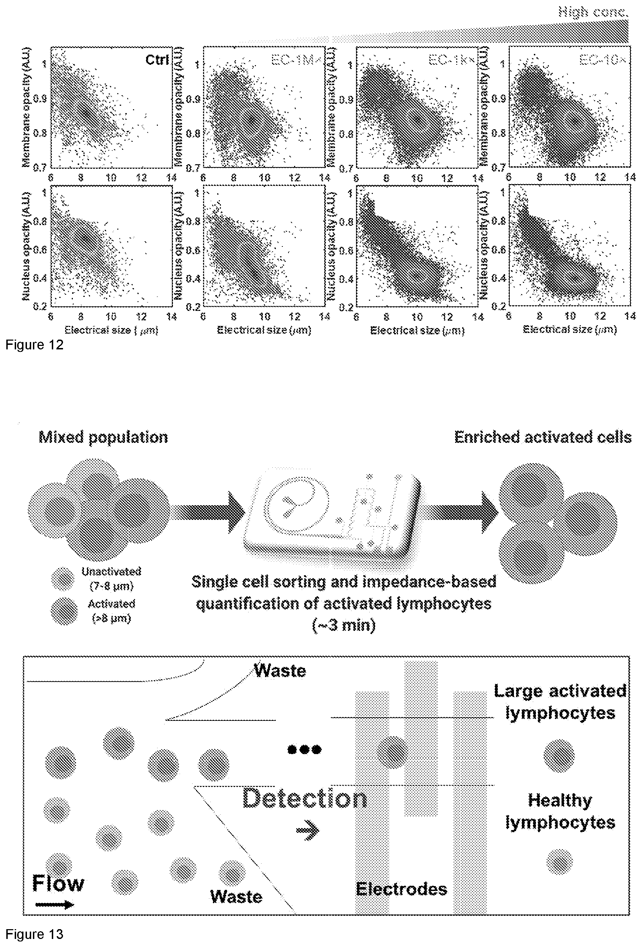

Lastly, the electrical signatures of neutrophils in response to bacterial infection was investigated. Isolated neutrophils in RPMI were cultured with Escherichia coli (EC) at different concentrations ($10\times$, $10^3\times$ and $10^6\times$ dilution) at 37ºC for 24 hr. Fig. 12 shows that low EC concentration (EC-1M$\times$) induced observable changes in impedance profile as evident in increased cell size, decreased membrane opacity and nucleus opacity. At higher EC concentrations, membrane opacity profiles revealed two distinct populations; 1) dead cell population with high opacity (~0.9-1), and 2) dense activated neutrophil population (membrane opacity ranging from 0.75 - 0.85). For nucleus opacity, impedance profiles show a main dense population with lower opacity (~0.4) similar to what observed in PMA treatment. Unlike NETosis studies, it is still unclear to link neutrophil impedance phenotypes to biological functions as neutrophils can exhibit different responses to eradicate bacteria (phagocytosis, degranulation or NETosis). Overall, these results demonstrate the use of multifrequency impedance cytometry and in particular, high frequency impedance signature, to study various neutrophil responses (live-dead, NETosis and bacterial responses). With all these capabilities, it is envisioned that the platform described herein can be readily translated for clinical diagnosis based on neutrophil responses in various diseases such as cancer, urinary tract infection (UTI) as well as sepsis.

Example 3: Integrated cell sorting and impedance cytometry for lymphocyte activation profiling

As a cell flows across alternative current (AC) energized coplanar electrodes, it disrupts the electric field leading to a change in electrical impedance. Impedance measurement at low frequency (0.1 - 1 MHz) correlates to particle size due to minimal electrical field penetration through particles (beads/cells), whereas impedance measurement at higher frequency regime (1 - 10 MHz) reflects membrane properties due to the effect of membrane polarization (Sun & Morgan, supra; Honrado et al., supra ). Herein dual frequencies measurement scheme (0.3 MHz and 1.72 MHz) was employed to capture two electrical characteristics of each cell: 1. Opacity defined as ratio of impedance signal magnitude at 1.72 MHz to impedance signal magnitude at 0.3 MHz reflecting the cell membrane capacitance, and 2. impedance signal magnitude at 0.3 MHz which indicates cell size. The excitation voltage for each frequency was set to 1 V to prevent electrode damage due to electrochemical reactions in high conductivity media (0.1%BSA in PBS, ~1.6 S/m) (Honrado et al., supra). To illustrate particle distribution, density scattered plots are used to represent both electrical parameters of a cell population.

First impedance profiling of different purified lymphocyte populations was performed; 1. healthy lymphocytes (control), 2. dead lymphocytes (10% Dimethyl sulfoxide (dead), 24 hour), and 3. activated lymphocytes (anti-CD3/CD28 Dynabeads (activated), 24 hour). Opacity of dead lymphocytes was higher than healthy lymphocytes probably due to lymphocytes apoptosis (de Abreu Costa et al., Molecules, 2017, 22, 1789), which led to the loss of membrane integrity (Zhang et al., Cell Res, 2018, 28, 9-21) and an increase in membrane conductance (Wang et al., Biochimica et biophysica acta, 2002, 1564, 412-420). These observations were confirmed using a double shell impedance model, and simulation results showed that an increase in membrane conductance will lower impedance signal at low frequency ($|Z_{LF}|$) and higher opacity ($|Z_{HF}|/|Z_{LF}|$) (Fig. 7). For activated lymphocytes, an increase in cell size with lower opacities was observed which could be attributed to an increased membrane surface area as lymphocytes undergo activation (Huang et al., Biochimica et Biophysica Acta (BBA) - Biomembranes, 1999, 1417, 51-62; Teague et al., Cytometry, 1993, 14, 772-782). These impedance measurements were also consistent with optical images which showed a significant increase in cell size for activated lymphocytes.

Next the use of an integrated inertial-impedance cytometry for quantitative lymphocyte activation profiling was examined (Fig. 13). Briefly, the platform consists of three stages namely (1) spiral cell sorter, (2) inertial cell focuser, and (3) impedance detector using coplanar electrodes. As the platform was previously applied for neutrophil (~8 to 10 $\mu$m) studies (Petchakup et al. (2019), *supra*), it was hypothesized that the device can enrich and electrically characterize activated lymphocytes (> 8 $\mu$m). To further improve the impedance detection sensitivity and consistency, a stepped sample inlet was added to hydrodynamically confine sample flow to the lower half of the channel using a sheath fluid . Under the influence of inertial coupled Dean flow migration in spiral microchannels, the larger cells (particle size ($A_p$) to hydrodynamic diameter ($D_h$) > 0.07) equilibrate near the channel bottom (closer to electrode surface) for activated lymphocytes sorting and impedance detection . To determine the optimal sample pinching effects, first different sample-to-sheath flow rate ratios using computational fluid dynamic (CFD) simulation were characterized (Fig. 2). At a flow rate ratio of 1:10 (160 $\mu$L/min:1600 $\mu$L/min), sample streamlines (black), which indicate cells/particles flow, spread equally on both top and bottom halves of the channel. With increasing flow ratio (1:21), particle streamlines were hydrodynamically confined to the lower half of the channel. The simulation results were further validated based on impedance characterization of 10 $\mu$m beads (similar in size to activated lymphocytes) (Fig. 3). At flow rate ratios of 1:10 and 1:14, two distinct clusters in the impedance profile were observed as particles (initially unconfined) were inertially focused into two different equilibrium positions (top and bottom half of the channel) in the spiral channel (Hou et al., Scientific Reports, 2016, 6, 29410). Conversely, at higher flow rate ratio conditions (1:21 and 1 :43), a single cluster was present which indicated successful particle focusing at the lower half of channel. These results highlight the critical importance of single stream particle focusing for improved impedance detection as particles also remained aligned close to the electrodes. Based on these results, a flow rate ratio of 1:21 (80 $\mu$L/min:1680 $\mu$L/min) was used for subsequent experiments.

In terms of device performance, the platform can achieve an impedance measurement throughput of -1$\times$10$^3$ particles/sec (Petchakup et al. (2019), *supra*). The passive inertial-based focusing utilized in this platform is also established at high flow conditions (Reynold's number, Re > 50), which enables processing high particle concentrations (up to 10$\times$10$^6$ particles/mL). Taken together, this chip facilitates processing of complex biological samples (e.g. blood), for label-free and rapid immune cell profiling.

Example 4: Quantitative profiling of activated T lymphocytes using integrated platform

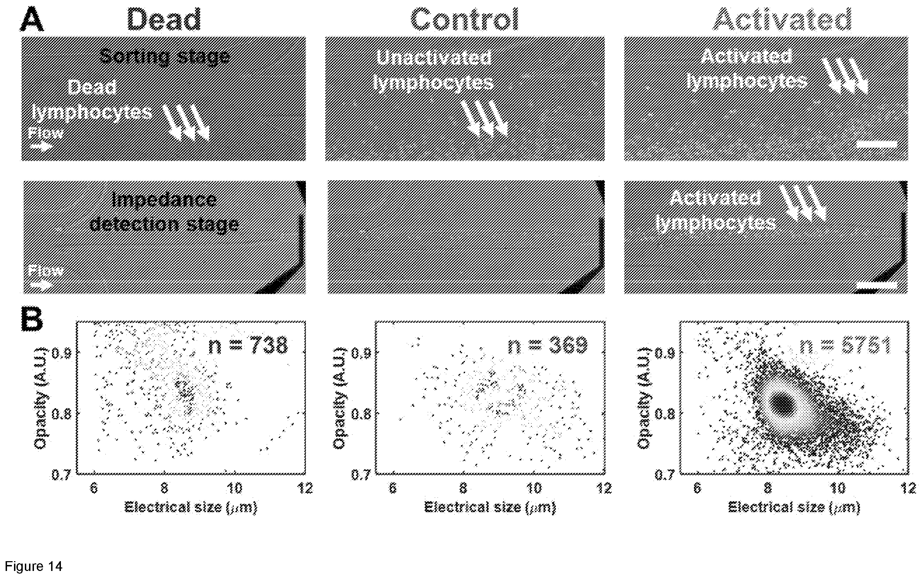

Next the integrated inertial-impedance cytometry platform was applied for electrical profiling of different T-lymphocyte (CD4+) phenotypes (control, dead and activated). Based on the spiral channel design (height of ~110 $\mu$m), only the activated lymphocytes (> 8 $\mu$m, $A_p/D_h$>0.07) will experience dominant inertial forces and equilibrate near the inner wall. These cells are then sorted into the middle outlet and channeled towards the impedance detector. Smaller unactivated lymphocytes are located further away from the inner wall region and will be removed into the bottom outlet as waste in the spiral sorter. Figure 14A shows stacked time-lapse images of cell focusing at the trifurcation of the spiral cell sorter and prior impedance detector for control and activated and dead lymphocyte populations. As expected, few cells were sorted into the impedance detector for both control lymphocytes and dead lymphocytes. In contrast, the larger activated lymphocytes exhibited a distinct shift in flow position as they flow closer to the inner wall, which resulted in a significant increase of cells sorted and detected by impedance cytometer. This translates to a higher impedance signal readout (higher activated cell count, ~15$\times$ higher) as compared to healthy control (Fig. 14B).

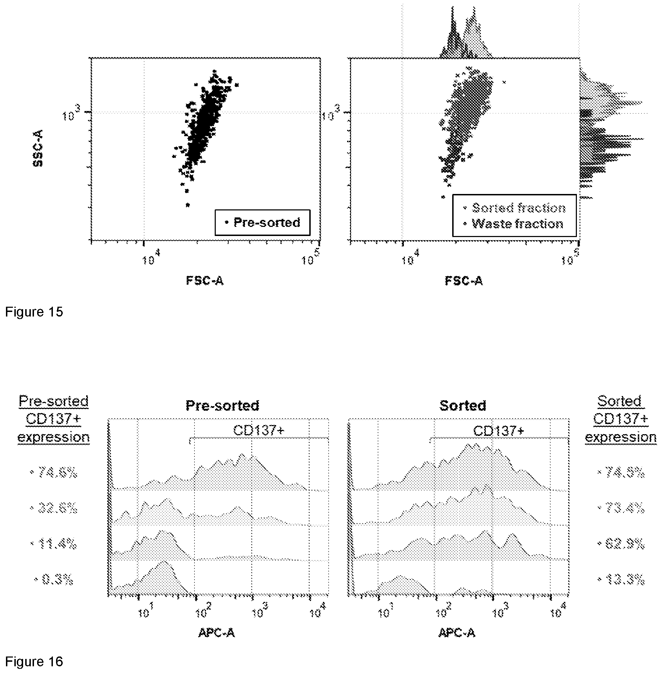

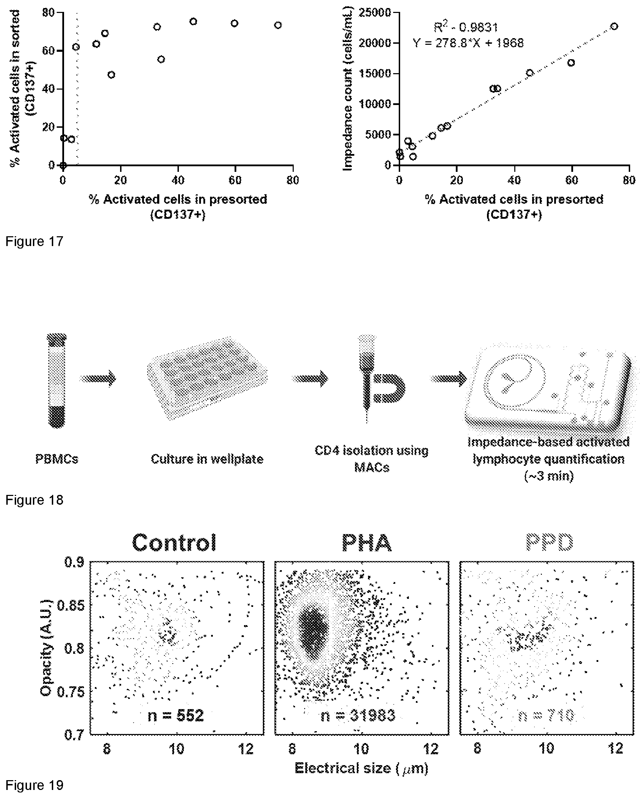

Further performed was flow cytometric analysis on various cell fractions including pre-sort (sample inlet), sorted cells (from outlet of impedance detector), and waste cells (from waste outlet of spiral sorter) using activated CD4 T-lymphocyte samples (by anti-CD3/CD28 beads). Due to the size-based sorting principle, an increase in forward side scatter (FSC) was observed for cells in the sorted fraction which confirmed the presence of larger cells detected by impedance (Fig. 15). To determine the sorting sensitivity and impedance detection limit, samples (concentration of 10$^5$ cells/mL) with varying levels (0.3% to 74.6%) of spiked activated (CD137+) lymphocytes were processed (Fig. 16). For samples containing high numbers of activated lymphocytes (> 5%), ~60 to 75% CD137+ expressing cells were consistently collected in the sorted fractions (Fig. 17). For samples with low lymphocyte activation (less than 5%), the average post sorted enrichment was ~30% (~ 11.7-fold) which could be attributed to random noise events. The calibration curve also showed good linearity between impedance count and percentage of activated lymphocytes in sample with a sensitivity of 278.8 impedance count/mL and detection limit of $1.7 \times 10^3$ cells/mL (3 standard deviation of detected number at 0% activated cells extrapolated from 3 different experiments) (Fig. 17). It should be noted that these metrics are dependent on treatment protocol and duration which may influence amount of initial/spontaneous activated cells presence in the samples (Min, Frontiers in Immunology, 2018, 9) as well as variability of biophysical properties due to cell cycle (Huang et al., supra; Kinjyo et al., Nature Communications, 2015, 6, 6301) Taken together, the results clearly suggest the feasibility of using the developed integrated platform to quantify low level of lymphocyte activation (< 5%).

Example 5: Integrated workflow for CD4 T lymphocyte antigen activation profiling

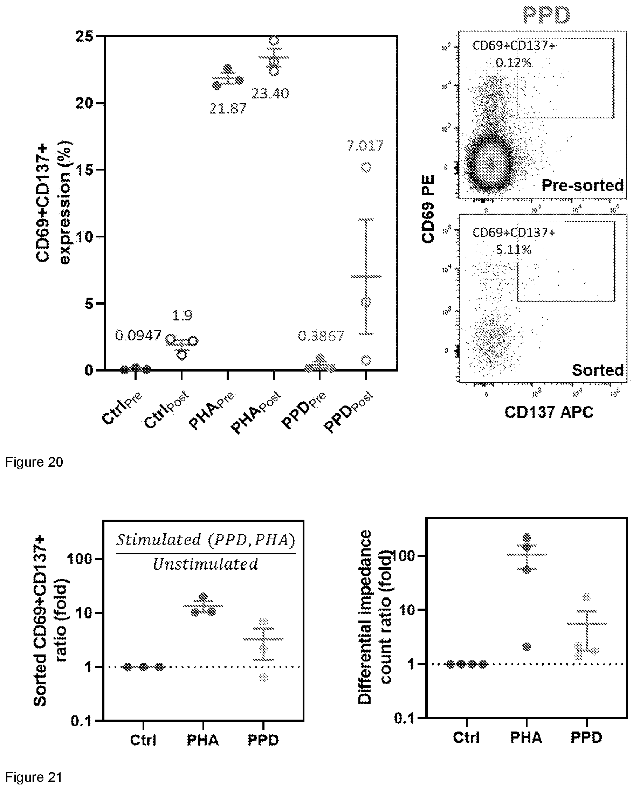

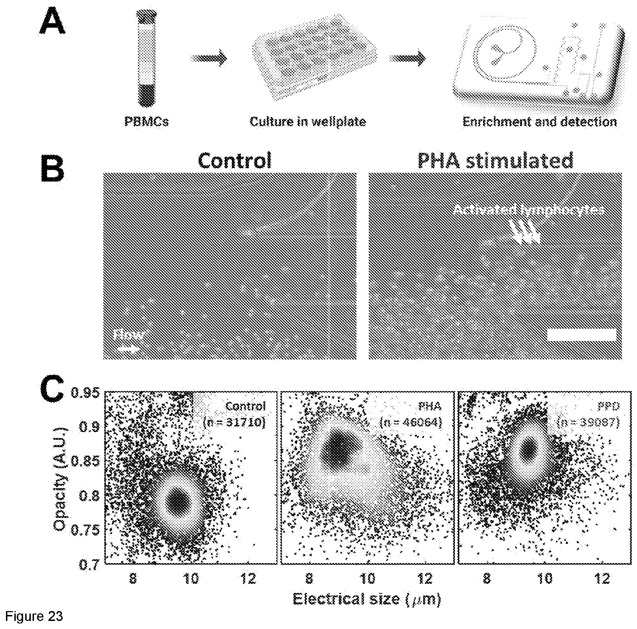

As a proof of concept for quantitative lymphocyte profiling in infectious diseases, PBMCs were stimulated with PHA and PPD for 24 hours to detect lymphocyte activation using the developed platform. A high cell count was observed for the control sample which could be attributed to the presence of (larger) monocytes in the PBMCs (Fig. 23). To overcome this issue, CD4 magnetic activated cell sorting (MACs, negative isolation) was combined to deplete monocytes and other resident cells prior impedance profiling (Fig. 18). Using this strategy, low cell count for control (n = 552), and higher impedance cell counts for PHA and PPD treated PBMCs (n = 31983 and 710, respectively) which indicated the presence of activated T lymphocytes were successfully detected (Fig. 19). This was in good agreement with flow cytometry analysis as activated lymphocytes (CD69+CD137+) were significantly enriched from 0.387% to 7.017% (~18-fold) for PPD treatment with the efficient removal of smaller lymphocytes in the spiral sorter (Fig. 20). To account for donor variability, the ratio of lymphocyte activation (CD69+CD137+) in the sorted cells (from impedance outlet) of stimulated samples (PHA or PPD) to the sorted cells in control samples (unstimulated) was quantified (Fig. 21). Similarly, a "differential impedance count" as the ratio of detected cell number in stimulated conditions (PHA or PPD) to the respective control (unstimulated) was also defined. As expected, the differential impedance count ratios were higher for PHA (~105-fold) than PPD (~6-fold) due to the stronger mitogen response (Fig. 21). Detection of PPD-specific lymphocyte response by impedance cytometry was also more sensitive than flow cytometry (~6-fold (impedance) ~3-fold (flow cytometry)) with differential impedance count greater than 1 detected in all donors. Taken together, these results demonstrate the use of the integrated platform for label-free quantitative lymphocyte activation profiling, which can be further applied as a point-of-care testing based on antigen-specific T lymphocyte responses.

Example 6: System prototyping for integrated impedance cytometer

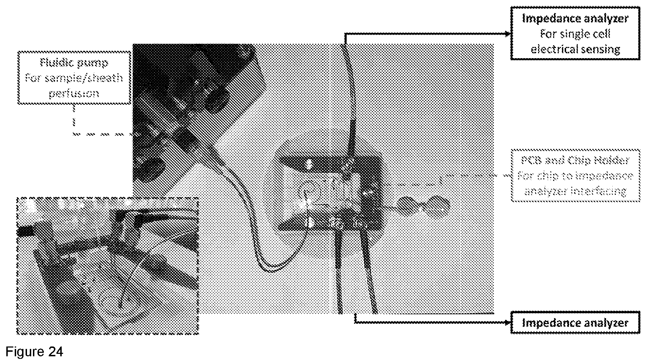

To facilitate commercialization of the integrated impedance cytometer, system prototyping was performed as shown in Fig. 24. First, the feasibility of miniaturizing the system was tested (Fig. 24) by incorporating 1. PCB chip holder for interfacing of a microchip to impedance analyzer, and 2. fluidic pumps to enable sample and sheath perfusion control using the integrated software. Next, a software with graphical user interface for the end users/collaborators was developed to provide real-time data visualization and quantification for on-site result anaylsis.

The invention has been described broadly and generically herein. Each of the narrower species and subgeneric groupings falling within the generic disclosure also form part of the invention. This includes the generic description of the invention with a proviso or negative limitation removing any subject matter from the genus, regardless of whether or not the excised material is specifically recited herein. Other embodiments are within the following claims.

One skilled in the art would readily appreciate that the present invention is well adapted to carry out the objects and obtain the ends and advantages mentioned, as well as those inherent therein. Further, it will be readily apparent to one skilled in the art that varying substitutions and modifications may be made to the invention disclosed herein without departing from the scope of the invention. The compositions, methods, procedures, treatments, molecules and specific compounds described herein are presently representative of preferred embodiments are exemplary and are not intended as limitations on the scope of the invention. Changes therein and other uses will occur to those skilled in the art which are encompassed within the scope of the invention are defined by the scope of the claims.

The invention illustratively described herein may suitably be practiced in the absence of any element or elements, limitation or limitations, not specifically disclosed herein. Thus, it should be understood that although the present invention has been specifically disclosed by exemplary embodiments and optional features, modification and variation of the inventions embodied therein herein disclosed may be resorted to by those skilled in the art, and that such modifications and variations are considered to be within the scope of this invention.

**Claims**

**1.** A method for, optionally quantitative, label-free cell profiling using impedance cytometry, the method comprising:

(i) providing a fluid sample comprising cells, and an impedance cytometer in form of a microfluidic device comprising a spiral-shaped flow channel with an inner and an outer wall relative to the center of the spiral and with two inlets and at least two outlets, wherein one of the two inlets is a sample inlet and is located at the outer wall of the spiral-shaped flow channel and the other of the two inlets is a sheath inlet and located at the inner wall of the spiral-shaped flow channel, wherein at least one of the outlets comprises an impedance detector comprising coplanar electrodes for direct impedance quantification of cells,

wherein the sample inlet is a stepped sample inlet in that the height of the sample inlet is lower than the height of the sheath fluid inlet and the flow channel and wherein the sample inlet is located at the bottom of the flow channel;

(ii) perfusing the sample into the impedance cytometer ;

(iii) measuring changes in the electric impedance for label-free quantitative profiling of cells in said sample.

2. The method of claim 1, wherein the fluid sample is a bodily fluid, preferably the cells are blood cells, more preferably myelocytes and/or lymphocytes and neutrophils.

3. The method of claim 1 or 2, wherein the method is for

(a) activated lymphocyte profiling; and/or
(b) neutrophil profiling.

4. The method of any one of claims 1 to 3, wherein the impedance measurement is carried out at low frequencies in the range of 0.1 to 1 MHz, preferably 0.2 to 0.6 MHz, to determine cell size.

5. The method of claim 4, wherein impedance measurement is additionally carried out at high frequencies in the range of >1 to 20 MHz, preferably 1.2 to 12.0 MHz, to determine electrical opacity as the ratio of impedance signal magnitude at low frequency to impedance signal magnitude at high frequency,

optionally wherein the impedance measurement is carried out at a frequency of >1 to 10 MHz, preferably 1.2 to 8 MHz, to determine membrane opacity and/or >10 to 20 MHz, preferably 10.5 to 15 MHz, to determine nuclear opacity.

6. The method of any one of claims 1 to 5, wherein the method uses microfluidic impedance cytometry.

7. The method of claim 1,

wherein step (ii) comprises introducing the sample of (i) into the sample inlet port at a sample flow rate and introducing a sheath fluid into the sheath inlet at a sheath flow rate, wherein the sample-to-sheath flow rate ratio is 1:15 or lower, preferably 1:20 or lower; and driving said sample and sheath fluid through the spiral-shaped flow channel for cell sorting and focusing,

and wherein step (iii) comprises quantitatively profiling of cells, preferably neutrophils or activated lymphocytes, by channeling the sorted and focused cells of step (ii) towards the impedance detector by driving the sorted and focused cells into the at least one outlet comprising the impedance detector and determining the impedance signal readout.

8. The method of claim 7, wherein:(a) the sample flow rate is in the range of from 10 to 400 μL/min; and/or
(b) the sample-to-sheath flow rate ratio is 1:20 to 1:50.

9. The method of claim 7 or 8, wherein the height of the sample inlet is lower than the height of the sheath fluid inlet and the flow channel, preferably by a factor of at least 2, more preferably 3-10.

10. The method of claim 9, wherein: (a) the sample inlet has a height of 15 to 50 μm and the sheath fluid inlet and flow channel have a height of 80 to 250 μm; and/or

(b) the opening width of the sheath fluid inlet is in the range of 200 to 700 μm and /or the opening width of the sample inlet is 50 to 200 μm; and/or
(c) the aspect ratio of sheath fluid inlet and sample inlet (width to height) is in the range of 3 to 10, preferably 4 to 8; and/or
(d) the area ratio of sheath inlet to sample inlet is in the range of 10 to 50, preferably 20 to 40.

11. The method of any one of claims 1 to 10, wherein the method further comprises a step of cell purification, optionally by conducting magnetic activated cell sorting (MACS), prior to impedance profiling in steps (ii) and (iii), by incubating the sample with magnetic beads that bind to undesired cells and separating the magnetic beads with the undesired cells bound thereto from unbound cells by a magnetic field, preferably the undesired cells include monocytes.

12. Biosensor for quantitative label-free cell profiling using impedance cytometry, the biosensor comprising:

(i) a microfluidic device comprising a spiral-shaped flow channel with an inner and an outer wall relative to the center of the spiral and with two inlets and at least two outlets, wherein one of the two inlets is the sample inlet and is located at the outer wall of the spiral-shaped flow channel and the other of the two inlets is the sheath fluid inlet and located at the inner wall of the spiral-shaped flow channel, wherein the sample inlet is a stepped sample inlet in that the height of the sample inlet is lower than the height of the sheath fluid inlet and the flow channel, and wherein the sample inlet is located at the bottom of the flow channel; and
(ii) coplanar electrodes for direct impedance quantification of cells, said coplanar electrodes integrated with at least one of the outlets of the microfluidic device.

13. The biosensor of claim 12, wherein the height of the sample inlet is lower than the height of the sheath fluid inlet and the flow channel, preferably by a factor of at least 2, more preferably 3-10.

14. The biosensor of claim 12 or 13, wherein: (a) the sample inlet has a height of 15 to 50 $\mu$m and the sheath fluid inlet and flow channel have a height of 80 to 250 $\mu$m; and/or

(b) the opening width of the sheath fluid inlet is in the range of 200 to 700 $\mu$m and /or the opening width of the sample inlet is 50 to 200 $\mu$m; and/or
(c) the aspect ratio of sheath fluid inlet and sample inlet (width to height) is in the range of 3 to 10, preferably 4 to 8; and/or
(d) the area ratio of sheath inlet to sample inlet is in the range of 10 to 50, preferably 20 to 40.

15. Integrated impedance cytometer comprising the biosensor of any one of claims 12 to 14 and further comprising (1) a microchip, (2) an impedance analyzer, and (3) fluidic pumps connected to the sample and sheath fluid inlet to enable perfusion control, wherein the microchip is interfaced with the impedance analyzer and the fluidic pumps and wherein the impedance analyzer is connected to the coplanar electrodes to enable impedance measurements.

**Patentansprüche**

1. Verfahren zur optional quantitativen, markierungsfreien Zellprofilierung mittels Impedanzzytometrie, wobei das Verfahren aufweist:

(i) Bereitstellen einer Fluidprobe, die Zellen aufweist, und eines Impedanzzytometers in Form einer Mikrofluidvorrichtung aufweisend einen spiralförmigen Strömungskanal mit einer Innen- und einer Außenwand relativ zum Zentrum der Spirale und mit zwei Einlässen und mindestens zwei Auslässen, wobei einer der beiden Einlässe ein Probeneinlass ist und sich an der Außenwand des spiralförmigen Strömungskanals befindet und der andere der beiden Einlässe ein Manteleinlass ist und sich an der Innenwand des spiralförmigen Strömungskanals befindet, wobei mindestens einer der Auslässe einen Impedanzdetektor aufweist, der koplanare Elektroden zur direkten Impedanzquantifizierung von Zellen aufweist, wobei der Probeneinlass ein abgestufter Probeneinlass ist, indem die Höhe des Probeneinlasses geringer als die Höhe des Mantelfluideinlasses und des Strömungskanals ist, und wobei sich der Probeneinlass am Boden des Strömungskanals befindet;
(ii) Perfundieren der Probe in den Impedanzzytometer;
(iii) Messen von Änderungen der elektrischen Impedanz zur markierungsfreien quantitativen Profilierung von Zellen in der Probe.

2. Verfahren gemäß Anspruch 1, wobei die Fluidprobe ein Körperfluid ist, wobei die Zellen vorzugsweise Blutzellen, noch bevorzugter Myelozyten und/oder Lymphozyten und Neutrophile sind.

3. Verfahren gemäß Anspruch 1 oder 2, wobei das Verfahren verwendet wird zur:

(a) aktivierte-Lymphozyten-Profilierung und/oder
(b) Neutrophilen-Profilierung.

4. Verfahren gemäß irgendeinem der Ansprüche 1 bis 3, wobei die Impedanzmessung bei niedrigen Frequenzen im Bereich von 0,1 bis 1 MHz, vorzugsweise 0,2 bis 0,6 MHz, durchgeführt wird, um die Zellgröße zu ermitteln.

5. Verfahren gemäß Anspruch 4, wobei die Impedanzmessung zusätzlich bei hohen Frequenzen im Bereich von >1 bis 20 MHz, vorzugsweise 1,2 bis 12,0 MHz, durchgeführt wird, um die elektrische Opazität als Verhältnis der Impedanzsignalstärke bei niedriger Frequenz zur Impedanzsignalstärke bei hoher Frequenz zu ermitteln, wobei die Impedanzmessung optional bei einer Frequenz von >1 bis 10 MHz, vorzugsweise 1,2 bis 8 MHz, durchgeführt wird, um die Membranopazität zu ermitteln, und/oder >10 bis 20 MHz, vorzugsweise 10,5 bis 15 MHz, durchgeführt wird, um die Kernopazität zu ermitteln.

6. Verfahren gemäß irgendeinem der Ansprüche 1 bis 5, wobei das Verfahren Mikrofluid-Impedanzzytometrie verwendet.

7. Verfahren gemäß Anspruch 1,

wobei Schritt (ii) aufweist: Einleiten der Probe aus (i) in den Probeneinlass mit einer Probenströmungsrate und Einleiten eines Mantelfluids in den Manteleinlass mit einer Mantelströmungsrate, wobei das Probe-zu-Mantelströmungsrate-Verhältnis 1:15 oder niedriger, vorzugsweise 1:20 oder niedriger ist; und Leiten der Probe und des Mantelfluids durch den spiralförmigen Strömungskanal zum Zellen-Sortieren und -Fokussieren, und wobei Schritt (iii) das quantitative Profilieren von Zellen, vorzugsweise Neutrophilen oder aktivierten Lymphozyten, aufweist, durch Leiten der sortierten und fokussierten Zellen aus Schritt (ii) in Richtung zum Impedanzdetektor, durch Leiten der sortierten und fokussierten Zellen in den mindestens einen Auslass, der den Impedanzdetektor aufweist, und Ermitteln der Impedanzsignalauslesung.

8. Verfahren gemäß Anspruch 7, wobei: (a) die Probenströmungsrate im Bereich von 10 bis 400 µL/min liegt; und/oder (b) das Probe-zu-Mantelströmungsrate-Verhältnis 1:20 bis 1:50 beträgt.

9. Verfahren gemäß Anspruch 7 oder 8, wobei die Höhe des Probeneinlasses geringer als die Höhe des Mantelfluideinlasses und des Strömungskanals ist, vorzugsweise um einen Faktor von mindestens 2, noch bevorzugter 3-10.

10. Verfahren gemäß Anspruch 9, wobei: (a) der Probeneinlass eine Höhe von 15 bis 50 µm hat und der Mantelfluideinlass und der Strömungskanal eine Höhe von 80 bis 250 µm haben; und/oder

(b) die Öffnungsbreite des Mantelfluideinlasses im Bereich von 200 bis 700 µm liegt und/oder die Öffnungsbreite des Probeneinlasses 50 bis 200 µm beträgt; und/oder
(c) das Aspektverhältnis von Mantelfluideinlass und Probeneinlass (Breite zu Höhe) im Bereich von 3 bis 10, vorzugsweise 4 bis 8, liegt; und/oder
(d) das Flächenverhältnis von Manteleinlass zu Probeneinlass im Bereich von 10 bis 50, vorzugsweise 20 bis 40 liegt.

11. Verfahren gemäß irgendeinem der Ansprüche 1 bis 10, wobei das Verfahren ferner einen Schritt der Zellreinigung aufweist, optional durch Durchführen einer magnetisch aktivierten Zellsortierung (MACS) vor der Impedanzprofilierung in den Schritten (ii) und (iii), durch Inkubieren der Probe mit Magnetkügelchen, die an unerwünschte Zellen binden, und Trennen der Magnetkügelchen mit den daran gebundenen unerwünschten Zellen durch ein Magnetfeld von ungebundenen Zellen, wobei die unerwünschten Zellen vorzugsweise Monozyten aufweisen.

12. Biosensor zur quantitativen markierungsfreien Zellprofilierung mittels Impedanzzytometrie, wobei der Biosensor aufweist:

(i) eine Mikrofluidvorrichtung, aufweisend einen spiralförmigen Strömungskanal mit einer Innen- und einer Außenwand relativ zum Zentrum der Spirale und mit zwei Einlässen und mindestens zwei Auslässen, wobei einer der beiden Einlässe der Probeneinlass ist und sich an der Außenwand des spiralförmigen Strömungskanals befindet und der andere der beiden Einlässe der Mantelfluideinlass ist und sich an der Innenwand des spiralförmigen Strömungskanals befindet, wobei der Probeneinlass ein abgestufter Probeneinlass ist, indem die Höhe des Probeneinlasses geringer als die Höhe des Mantelfluideinlasses und des Strömungskanals ist, und wobei sich der Probeneinlass am Boden des Strömungskanals befindet; und
(ii) koplanare Elektroden zur direkten Impedanzquantifizierung von Zellen, wobei die koplanaren Elektroden in mindestens einen der Auslässe der Mikrofluidvorrichtung integriert sind.

13. Biosensor gemäß Anspruch 12, wobei die Höhe des Probeneinlasses geringer als die Höhe des Mantelfluideinlasses und des Strömungskanals ist, vorzugsweise um einen Faktor von mindestens 2, noch bevorzugter 3-10.

14. Biosensor gemäß Anspruch 12 oder 13, wobei: (a) der Probeneinlass eine Höhe von 15 bis 50 µm hat und der Mantelfluideinlass und der Strömungskanal eine Höhe von 80 bis 250 µm haben; und/oder

(b) die Öffnungsbreite des Mantelfluideinlasses im Bereich von 200 bis 700 µm liegt und/oder die Öffnungsbreite des Probeneinlasses 50 bis 200 µm beträgt; und/oder
(c) das Aspektverhältnis von Mantelfluideinlass und Probeneinlass (Breite zu Höhe) im Bereich von 3 bis 10, vorzugsweise 4 bis 8, liegt; und/oder
(d) das Flächenverhältnis von Manteleinlass zu Probeneinlass im Bereich von 10 bis 50, vorzugsweise 20 bis 40 liegt.

15. Integrierter Impedanzzytometer, aufweisend den Biosensor gemäß irgendeinem der Ansprüche 12 bis 14 und ferner aufweisen (1) einen Mikrochip, (2) einen Impedanzanalysator und (3) Fluidpumpen, die mit dem Proben- und Mantelfluideinlass verbunden sind, um eine Perfusionssteuerung zu ermöglichen, wobei der Mikrochip mit dem Impedanzanalysator und den Fluidpumpen über eine Schnittstelle verbunden ist und wobei der Impedanzanalysator mit den koplanaren Elektroden verbunden ist, um Impedanzmessungen zu ermöglichen.


**Revendications**

1. Procédé de profilage de cellules sans marquage, éventuellement quantitatif, utilisant la cytométrie par impédance, le procédé comprenant :

(i) la fourniture d'un échantillon de fluide comprenant des cellules, et un cytomètre à impédance sous la forme d'un dispositif microfluidique comprenant un canal d'écoulement en forme de spirale avec une paroi intérieure et une paroi extérieure par rapport au centre de la spirale et avec deux entrées et au moins deux sorties, dans lequel l'une des deux entrées est une entrée d'échantillon et est située au niveau de la paroi extérieure du canal d'écoulement en forme de spirale et l'autre des deux entrées est une entrée de gaine et est située au niveau de la paroi intérieure du canal d'écoulement en forme de spirale, dans lequel au moins l'une des sorties comprend un détecteur d'impédance comprenant des électrodes coplanaires pour la quantification directe de l'impédance des cellules,
dans lequel l'entrée d'échantillon est une entrée d'échantillon à gradins en ce que la hauteur de l'entrée d'échantillon est inférieure à la hauteur de l'entrée de fluide de gaine et du canal d'écoulement et dans lequel l'entrée d'échantillon est située au fond du canal d'écoulement ;
(ii) la perfusion de l'échantillon dans le cytomètre à impédance ;
(iii) la mesure de changements d'impédance électrique pour le profilage quantitatif sans marquage de cellules dans ledit échantillon.

2. Procédé selon la revendication 1, dans lequel l'échantillon de fluide est un fluide corporel, de préférence les cellules sont des cellules sanguines, plus préférablement des myélocytes et/ou des lymphocytes et des neutrophiles.

3. Procédé selon la revendication 1 ou 2, dans lequel le procédé est pour :

(a) le profilage de lymphocytes activés ; et/ou
(b) le profilage de neutrophiles.

4. Procédé selon l'une quelconque des revendications 1 à 3, dans lequel la mesure d'impédance est effectuée à des fréquences basses dans la plage de 0,1 à 1 MHz, de préférence de 0,2 à 0,6 MHz, afin de déterminer la taille des cellules.

5. Procédé selon la revendication 4, dans lequel la mesure d'impédance est en outre effectuée à des fréquences élevées dans la plage de >1 à 20 MHz, de préférence de 1,2 à 12,0 MHz, afin de déterminer l'opacité électrique comme étant le rapport de magnitude de signal d'impédance à basse fréquence à la magnitude de signal d'impédance à haute fréquence,

en option, dans lequel la mesure d'impédance est effectuée à une fréquence de > 1 à 10 MHz, de préférence de 1,2 à 8 MHz, pour déterminer l'opacité membranaire et/ou de > 10 à 20 MHz, de préférence 10,5 à 15 MHz, pour déterminer l'opacité nucléaire.

6. Procédé selon l'une quelconque des revendications 1 à 5, dans lequel le procédé utilise la cytométrie par impédance microfluidique.

7. Procédé selon la revendication 1,

dans lequel l'étape (ii) comprend l'introduction de l'échantillon de (i) dans l'orifice d'entrée d'échantillon à un débit d'échantillon et l'introduction d'un fluide de gaine dans l'entrée de gaine à un débit de gaine, dans lequel le rapport débit d'échantillon à débit de gaine est de 1:15 ou moins, de préférence de 1:20 ou moins ; et l'entraînement dudit échantillon et dudit fluide de gaine à travers le canal d'écoulement en forme de spirale pour le tri et la focalisation des cellules,
et dans lequel l'étape (iii) comprend le profilage quantitatif de cellules, de préférence de neutrophiles ou de lymphocytes activés, en acheminant les cellules triées et focalisées de l'étape (ii) vers le détecteur d'impédance en entraînant les cellules triées et focalisées dans ladite au moins une sortie comprenant le détecteur d'impédance et en déterminant la lecture de signal d'impédance.

8. Procédé selon la revendication 7, dans lequel : (a) le débit d'échantillon est dans la plage de 10 et 400 µL/min ; et/ou (b) le rapport débit d'échantillon à débit de gaine est de 1:20 à 1:50.

9. Procédé selon la revendication 7 ou 8, dans lequel la hauteur de l'entrée d'échantillon est inférieure à la hauteur de l'entrée de fluide de gaine et du canal d'écoulement, de préférence d'un facteur d'au moins 2, encore de préférence de 3 à 10.

10. Procédé selon la revendication 9, dans lequel : (a) l'entrée d'échantillon a une hauteur de 15 à 50 µm et l'entrée de fluide de gaine et le canal d'écoulement ont une hauteur de 80 à 250 µm ; et/ou

(b) la largeur d'ouverture de l'entrée de fluide de gaine est dans la plage de 200 à 700 µm et/ou la largeur d'ouverture de l'entrée d'échantillon est de 50 à 200 µm ; et/ou
(c) le rapport d'aspect de l'entrée de fluide de gaine et de l'entrée d'échantillon (largeur par rapport à la hauteur) est dans la plage de 3 à 10, de préférence de 4 à 8 ; et/ou
(d) le rapport de surface d'entrée de gaine à entrée d'échantillon est dans la plage de 10 à 50, de préférence de 20 à 40.

11. Procédé selon l'une quelconque des revendications 1 à 10, dans lequel le procédé comprend en outre une étape de purification cellulaire, éventuellement en effectuant un tri cellulaire activé magnétiquement (MACS), avant le profilage d'impédance dans les étapes (ii) et (iii), en incubant l'échantillon avec des billes magnétiques qui se lient aux cellules indésirables et en séparant les billes magnétiques auxquelles sont liées les cellules indésirables des cellules non liées à l'aide d'un champ magnétique, de préférence les cellules indésirables comprenant des monocytes.

12. Biocapteur pour le profilage quantitatif sans marquage de cellules en utilisant la cytométrie par impédance, le biocapteur comprenant :

(i) un dispositif microfluidique comprenant un canal d'écoulement en forme de spirale avec une paroi intérieure et une paroi extérieure par rapport au centre de la spirale et avec deux entrées et au moins deux sorties, dans lequel l'une des deux entrées est l'entrée d'échantillon et est située au niveau de la paroi extérieure du canal d'écoulement en forme de spirale et l'autre des deux entrées est l'entrée de fluide de gaine et est située au niveau de la paroi intérieure du canal d'écoulement en forme de spirale, dans lequel l'entrée d'échantillon est une entrée d'échantillon à gradins en ce que la hauteur de l'entrée d'échantillon est inférieure à la hauteur de l'entrée de fluide de gaine et du canal d'écoulement, et dans lequel l'entrée d'échantillon est située au fond du canal d'écoulement ; et
(ii) des électrodes coplanaires pour la quantification directe de l'impédance des cellules, lesdites électrodes coplanaires étant intégrées à au moins l'une des sorties du dispositif microfluidique.

13. Biocapteur selon la revendication 12, dans lequel la hauteur de l'entrée d'échantillon est inférieure à la hauteur de l'entrée de fluide de gaine et du canal d'écoulement, de préférence d'un facteur d'au moins 2, plus préférablement de 3 à 10.

**14.** Biocapteur selon la revendication 12 ou 13, dans lequel : (a) l'entrée d'échantillon a une hauteur de 15 à 50 μm et l'entrée de fluide de gaine et le canal d'écoulement ont une hauteur de 80 à 250 μm ; et/ou

(b) la largeur d'ouverture de l'entrée de fluide de gaine est dans la plage de 200 à 700 μm et/ou la largeur d'ouverture de l'entrée d'échantillon est de 50 à 200 μm; et/ou
(c) le rapport d'aspect d'entrée de fluide de gaine à l'entrée d'échantillon (largeur par rapport à la hauteur) est dans la plage de 3 à 10, de préférence de 4 à 8 ; et/ou
(d) le rapport de surface d'entrée de gaine à l'entrée d'échantillon est compris dans la plage de 10 à 50, de préférence de 20 à 40.

**15.** Cytomètre à impédance intégré comprenant le biocapteur selon l'une quelconque des revendications 12 à 14 et comprenant en outre (1) une micropuce, (2) un analyseur d'impédance, et (3) des pompes fluidiques connectées à l'entrée d'échantillon et à l'entrée de fluide de gaine pour permettre le contrôle de la perfusion, dans lequel la micropuce est interfacée avec l'analyseur d'impédance et les pompes fluidiques et dans lequel l'analyseur d'impédance est connecté aux électrodes coplanaires pour permettre les mesures d'impédance.

Figure 1

Figure 2

Figure 3

Figure 4

Figure 5

Figure 6

Figure 7

Figure 8

Figure 9

Figure 10

Figure 11

Figure 12

Figure 13

Figure 14

EP 4 308 902 B1

Figure 15

Figure 16

Figure 17

Figure 18

Figure 19

Figure 20

Figure 21

Figure 22

**A**

PBMCs → Culture in wellplate → Enrichment and detection

**B**

Control   PHA stimulated

**C**

Figure 23

Figure 24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- SG 10202102747Y
- WO 2017003380 A1

### Non-patent literature cited in the description

- **WOLFL et al.** *Blood*, 2007, vol. 110, 201-210
- **CIBRIÁN ; SÁNCHEZ-MADRID**. *journal of immunology*, 2017, vol. 47, 953
- **VERSTEEGEN et al.** *J Immunol Methods*, 1988, vol. 111, 25-29
- **SUN ; MORGAN**. *Microfluidics and Nanofluidics*, 2010, 423-443
- **CHEN et al.** *International Journal of Molecular Sciences*, 2015, vol. 16, 9804
- **PETCHAKUP et al.** *Micromachines*, 2017, vol. 8, 87
- **HONRADO et al.** *Lab on a Chip*, 2021, vol. 21, 22-54
- **PETHIG et al.** *Electrophoresis*, 2002, vol. 23, 2057-2063
- **HUANG et al.** *Biochimica et Biophysica Acta (BBA) - Biomembranes*, 1999, vol. 1417, 51-62
- **HASSAN et al.** *Nat. Protocols*, 2016, vol. 11, 714-726
- **WATKINS et al.** *Science Translational Medicine*, 2013, vol. 5, 214ra170-214ra170
- **ROLLO et al.** *Biosensors and Bioelectronics*, 2017, vol. 94, 193-199
- **HAN et al.** *ACS Nano*, 2020, vol. 14, 8646-8657
- **PETCHAKUP et al.** *Lab on a Chip*, 2019, vol. 19, 1736-1746
- **SPENCER et al.** *Lab on a Chip*, 2016
- **DE NINNO et al.** *Lab on a Chip*, 2017
- **CASELLI et al.** *Sensors and Actuators B: Chemical*, 2018, vol. 256, 580-589
- **HAANDBÆK et al.** *ACS Sensors*, 2016, vol. 1, 1020-1027
- **SUN ; MORGAN**. *Microfluidics and Nanofluidics*, 2010, vol. 8, 423-443
- **PETHIG, R. et al.** *Electrophoresis*, 2002, vol. 23, 2057-2063
- **HASSAN et al.** *Nat. Protocols*, vol. 11, 714-726
- **SIMON et al.** *Lab on a Chip*, 2016, vol. 16, 2326-2338
- **SONG et al.** *Lab on a Chip*, 2013, vol. 13, 2300-2310
- **HOU et al.** *Sci. Rep.*, 2013, vol. 3
- **HOU et al.** *Lab Chip*, 2015, vol. 15, 2297-2307
- **NGUYEN et al.** Fundamentals and Applications of Microfluidics. ARTECH HOUSE, INC., 2006, 395-417
- Fabrication and Microfluidics. **LI et al.** Lab on a Chip Technology. Caister Academic Press, 2009, vol. 1, 385-403
- **NGUYEN et al.** Fundamentals and Applications of Microfluidics. ARTECH HOUSE, INC., 2006, 55-115
- **TABELING**. Introduction to Microfluidics. Oxford University Press, 2005, 244-295
- Fabricating PDMS Microfluidic Channels Using a Vinyl Sign Plotter. **ARMANI et al.** Lab on a Chip Technology. Caister Academic Press, 2009, vol. 1, 9-15
- Bonding Techniques for Thermoplastic Microfluidics. **TSAO et al.** Lab on a Chip Technology. Caister Academic Press, 2009, vol. 1, 45-63
- Silicon and Glass Micromachining. **CARLEN et al.** Lab on a Chip Technology. Caister Academic Press, 2009, vol. 1, 83-114
- Microfluidics-based Lithography for Fabrication of Multi-Component Biocompatible Microstructures. **CHEUNG et al.** Lab on a Chip Technology. Caister Academic Press, 2009, vol. 1, 115-138
- Laminated Object Manufacturing (LOM) Technology-Based Multi-Channel Lab-on-a-Chip for Enzymatic and Chemical Analysis. **SUN et al.** Lab on a Chip Technology. Caister Academic Press, 2009, vol. 1, 161-172
- Laser Micromachining. **WADDELL et al.** Lab on a Chip Technology. Caister Academic Press, 2009, vol. 1, 173-184
- **NGUYEN et al.** Fundamentals and Applications of Microfluidics. ARTECH HOUSE, INC, 2006, 255-309
- Introduction to Electrokinetic Transport in Microfluidic Systems. **ERICKSON et al.** Lab on a Chip Technology. Caister Academic Press, 2009, vol. 1, 231-248

- Monolithic Membrane Valves and Pumps. **GROVER et al.** Lab on a Chip Technology. Caister Academic Press, 2009, vol. 1, 285-317
- Integrated Circuit/Microfluidic Chips for Dielectric Manipulation. **HUNT et al.** Lab on a Chip Technology. Caister Academic Press, vol. 2, 187-206
- Braille Microfluidics. **BERSANO-BEGEY et al.** Lab on a Chip Technology. Caister Academic Press, vol. 2, 269-285
- **KWON et al.** *Scientific Reports*, 2015, vol. 5, 15623
- **LI et al.** *EMBO reports*, 2020, vol. 21, e48779
- **YIPP** ; **KUBES**. *Blood*, 2013, vol. 122, 2784-2794
- **TATSIY** ; **MCDONALD**. *Frontiers in Immunology*, 2018, vol. 9
- **KHAN et al.** *Frontiers in Medicine*, 2018, vol. 5
- **DE ABREU COSTA et al.** *Molecules*, 2017, vol. 22, 1789
- **ZHANG et al.** *Cell Res*, 2018, vol. 28, 9-21
- **WANG et al.** *Biochimica et biophysica acta*, 2002, vol. 1564, 412-420
- **TEAGUE et al.** *Cytometry*, 1993, vol. 14, 772-782
- **HOU et al.** *Scientific Reports*, 2016, vol. 6, 29410
- **MIN**. 9. *Frontiers in Immunology*, 2018
- **KINJYO et al.** *Nature Communications*, 2015, vol. 6, 6301